# FASCICULE DE BREVET EUROPEEN

(11) **EP 0 936 869 B1**
(45) Date de publication et mention de la délivrance du brevet: **12.12.2001**
(21) Numéro de dépôt: 97910488.2
(22) Date de dépôt: 15.10.1997
(51) Int. Cl.: A22B 5/00

(54) **PROCEDE ET DISPOSITIF DE DEJOINTAGE DE TETE D'ANIMAL ABATTU**
VERFAHREN UND VORRICHTUNG ZUR ABTRENNUNG DES KOPFES BEI SCHLACHTTIEREN
METHOD AND DEVICE FOR DISJOINTING THE HEAD OF A SLAUGHTERED ANIMAL

(30) Priorité: 15.10.1996 FR 9612780
(43) Date de publication de la demande: 25.08.1999
(73) Titulaire: DURAND INTERNATIONAL (société anonyme), 07210 Baix (FR)
(72) Inventeur: VAN HOREEBECK, Jean, F-07200 Aubenas (FR); AMBROIS, Gilles, F-26320 Saint Marcel lès Valence (FR)
(74) Mandataire: Derambure, Christian
(86) Numéro de dépôt international: FR9701843
(87) Numéro de publication internationale: WO9816113

(56) Documents cités:
- EP-A- 0 212 580
- EP-A- 0 635 210

## Description

L'invention concerne le déjointage de la tête d'un animal abattu, à savoir un porc.

Elle vise, plus particulièrement, un procédé et un dispositif pour déterminer sur le corps de l'animal la position optimale de mise en oeuvre d'un dispositif pour déjointer la tête ; ainsi qu'un procédé et un dispositif pour déjointer la tête ; et, enfin, une installation pour la mise en oeuvre de ces procédés, incorporant ces dispositifs.

Le document EP-A-212 580 révèle un dispositif pour trancher la tête d'une carcasse de bovin dans lequel d'une part le bovin est suspendu tête en bas et d'autre part l'outil de tranchage est agencé pour être déplacé d'une position écartée à une position intermédiaire où il entoure le corps du bovin, par un mouvement pendulaire et de la position intermédiaire à une position de coupe, par un mouvement de translation vertical. Dans la position intermédiaire et dans la position de coupe le plan de l'outil de tranchage est disposé horizontalement, perpendiculaire à l'axe le long duquel est disposé le corps du bovin.

L'agencement de ce dispositif présente un certain nombre de limites ou d'inconvénients :
- Il n'est pas destiné aux porcs mais aux bovins.
- La tête est totalement séparée du restant du corps ce qui est problématique pour des raisons sanitaires.
- L'outil de tranchage est engagé très largement au-dessus de la position de coupe avec, en conséquence, le raclage voire la coupe du corps de l'animal et sa détérioration consécutive.
- La disposition même de l'outil de tranchage perpendiculairement à l'axe de suspension de l'animal fait perdre une quantité non négligeable de viande, cette position de coupe s'avérant ne pas être optimale.
- Le mouvement pendulaire de l'outil de tranchage ne fournit pas la précision d'engagement convenable.

Le document EP-A-635 210 concerne un procédé et un dispositif de traitement d'un animal dans lequel on met en oeuvre un dispositif de mesure directe d'un point de la surface arrière de la tête de l'animal, comprenant une ou deux aiguilles et un dispositif de séparation. Selon ce document les deux dispositifs en question sont séparés l'un de l'autre.

L'agencement selon le document EP-A-635 210 présente également un certain nombre de limites ou d'inconvénients :
- Le positionnement du dispositif de séparation par rapport au corps de l'animal n'est pas défini.
- La conception de dispositifs séparés de mesure et de séparation est complexe.

Le dispositif de mesure - en l'occurrence la ou les aiguilles - pénètre dans le corps de l'animal avec les conséquences inhérentes de pollution croisée.

L'invention a donc pour but de remédier aux inconvénients qui précèdent en proposant une technique de déjointage de tête dans laquelle :
- Le positionnement du dispositif de déjointage proprement dit est déterminé non seulement de façon optimale, mais aussi avec précision.
- L'agencement soit simple.
- Le dispositif de détermination de la position du dispositif de déjointage agit exclusivement depuis l'extérieur du corps ; ce dispositif est intégré et, le cas échéant, pour partie commun avec le dispositif de déjointage lui-même.
- Le corps de l'animal ne soit pas inutilement détérioré.
- Le minimum de viande soit perdu.
- L'automatisation soit facilitée.

Selon un premier aspect, l'invention concerne un procédé pour déterminer sur le corps d'un animal abattu, à savoir un porc, disposé le long d'un axe principal, la position optimale de mise en oeuvre d'un dispositif de déjointage -dite position de déjointage- dans lequel :
- on met en oeuvre un dispositif mécanique de détermination directe de la position de déjointage, comprenant un gabarit échancré définissant un plan de référence ;
- on place le gabarit avec son échancrure autour d'une partie au moins du corps de l'animal, à l'extérieur, vers et à partir de sa partie dorsale, dans une position d'approche située dans la zone de la position de déjointage mais à l'écart de celle-ci vers l'arrière de l'animal ;
- depuis la position d'approche, on amène le gabarit en appui mastoïdien incliné, de manière que le plan de référence soit incliné par rapport à un plan transversal à l'axe principal, d'un angle aigu convenable α, dans le sens allant de la partie ventrale vers la partie dorsale, et des pattes de derrière vers les pattes de devant ou la tête.

Selon d'autres caractéristiques de l'invention, on choisit l'angle α entre 10 et 45° environ, plus spécialement entre 15 et 25° environ, notamment égal à ou de l'ordre de 20°.

On choisit l'échancrure du gabarit de manière que celui-ci soit placé sans serrage ou sans serrage excessif du corps, afin de pouvoir opérer son déplacement relatif par rapport au corps de l'animal de la position d'approche jusqu'à la position d'appui mastoïdien incliné, sans dégradation substantielle du corps de l'animal.

Le déplacement relatif du gabarit par rapport au corps de l'animal jusqu'à la position d'appui mastoïdien incliné est essentiellement une translation le long de l'axe principal et en direction de la tête.

Pour arriver à la position d'approche, on opère un déplacement relatif du gabarit par rapport au corps, transversalement à l'axe principal, à partir d'une position de dégagement située à l'écart du corps et du côté de sa partie dorsale. Ce déplacement est essentiellement une translation perpendiculaire ou sensiblement perpendiculaire à l'axe principal.

Le procédé comporte une étape préliminaire de détermination approximative de la position de déjointage, de manière à déterminer la position d'approche afin que le déplacement du gabarit de la position d'approche à la position d'appui mastoïdien incliné soit limité.

Pour réaliser la détermination approximative de la position de déjointage, on repère d'abord un emplacement significatif sur le - ou du - corps de l'animal et plus spécialement l'extrémité libre avant de la tête par voie optique, par contact mécanique, par détecteur de proximité, ou équivalent.

Ayant repéré la position de l'extrémité libre avant de la tête de l'animal, on en déduit la longueur du corps de l'animal et on calcule en conséquence l'emplacement de la position d'approche.

On part d'une position d'attente ou le gabarit est éloigné de la position de déjointage et du corps de l'animal, vers l'arrière ; on amène le gabarit d'échancrure appropriée, convenablement incliné avec l'angle α dans la position de dégagement, notamment par une translation axiale ; on opère ensuite le déplacement relatif transversal du gabarit par rapport au corps de l'animal de la position de dégagement à la position d'approche ; on opère enfin une translation axiale relative du gabarit par rapport au corps de l'animal vers la tête jusqu'à la position d'appui mastoïdien incliné.

On détermine la position d'appui mastoïdien incliné par suite du blocage exercé par les protubérances mastoïdiennes du corps de l'animal sur le gabarit d'échancrure appropriée.

Une fois que le gabarit est amené en position d'appui mastoïdien incliné, on opère un mouvement supplémentaire relatif limité du gabarit par rapport au corps de l'animal, en direction de la tête.

Lors de ce mouvement supplémentaire relatif, on fait pivoter le gabarit d'un angle faible Δ α, dans le sens de l'augmentation de l'angle α, autour d'un axe de pivotement du gabarit situé à l'écart du corps de l'animal vers la partie dorsale et la tête.

L'angle Δ α est compris entre 5 et 10° environ.

La course du gabarit entre la position d'approche et la position d'appui mastoïdien incliné est de l'ordre de ou inférieure à quelques centimètres.

Selon les réalisations, l'inclinaison du plan de référence du gabarit reste constante ou sensiblement constante pendant tout le déroulement du procédé. on règle l'angle α en fonction de la morphologie du corps de l'animal.

L'invention met en oeuvre un dispositif de détermination de la position de déjointage intégré et le cas échéant pour partie commun au dispositif de déjointage lui-même.

Lors des déplacements relatifs du gabarit par rapport au corps de l'animal en vue de la mise en oeuvre du procédé, on déplace essentiellement le gabarit, sans préjudice d'un déplacement du corps de l'animal à défilement transversal.

Selon une réalisation, on suspend le corps de l'animal tête en bas, l'axe principal étant sensiblement vertical, le plan transversal à l'axe principal étant sensiblement horizontal, le gabarit étant incliné de manière que l'échancrure ait son ouverture dirigée vers le haut.

Selon un deuxième aspect, l'invention concerne un procédé pour déjointer la tête dans lequel :
- on met en oeuvre un dispositif mécanique de déjointage de tête comprenant des mâchoires coupantes définissant un plan principal ;
- on détermine directement sur le corps de l'animal la position optimale de positionnement du dispositif de déjointage, grâce à un dispositif de détermination de la position de déjointage, cette position de déjointage étant telle que le plan principal soit incliné par rapport à un plan transversal à l'axe principal d'un angle aigu convenable égal ou voisin de α, dans un sens allant de la partie ventrale vers la partie dorsale et des pattes de derrière vers les pattes de devant ou la tête ;
- on positionne le dispositif de déjointage dans la position de déjointage et dans cette position on l'actionne ;
- on met en oeuvre un dispositif mécanique de détermination de la position de déjointage comprenant un gabarit échancré, intégré et le cas échéant pour partie commun, au dispositif de déjointage lui-même ;

Selon une autre caractéristique le procédé pour déjointer la tête est tel que :
- on met en oeuvre un dispositif mécanique de déjointage de tête comprenant des mâchoires coupantes définissant un plan principal ;
- on détermine directement sur le corps de l'animal la position optimale de positionnement du dispositif de déjointage par le procédé précédemment décrit, grâce au dispositif de détermination de la position de déjointage, le plan principal étant incliné par rapport à un plan transversal à l'axe principal d'un angle aigu convenable égal ou voisin de α, dans le sens allant de la partie ventrale vers la partie dorsale et des pattes de derrière vers les pattes de devant ou la tête ;
- on positionne le dispositif de déjointage dans la position de déjointage et, dans cette position on l'actionne.

Selon d'autres caractéristiques,on actionne le dispositif de déjointage en serrant sur le corps de l'animal les mâchoires coupantes une fois, notamment immédiatement après, que le gabarit ait permis de déterminer la position de déjointage.

On commande le dispositif de déjointage -à savoir les mâchoires coupantes- à partir du blocage exercé sur le gabarit par les protubérances mastoïdiennes, respectivement par le pivotement supplémentaire Δ α du gabarit, respectivement des mâchoires coupantes.

On déjointe la tête soit en sectionnant la colonne vertébrale ainsi que la masse musculaire du collier, partiellement, uniquement dans la partie dorsale de la trachée artère, la tête demeurant associée à la partie restante du corps de l'animal par la partie ventrale ; soit en sectionnant la colonne vertébrale ainsi que la masse musculaire et ce totalement, la tête étant alors totalement dissociée de la partie restante du corps de l'animal.

Avant que de sectionner la colonne vertébrale et la masse musculaire du collier, on immobilise substantiellement le corps de l'animal au moins relativement par rapport aux mâchoires coupantes.

On contribue à immobiliser le corps de l'animal soit au moyen du gabarit et/ou des mâchoires coupantes, ces dernières ayant des parties terminales distales recourbées en pointe vers l'intérieur, pénétrant ponctuellement et partiellement dans la masse musculaire du collier ; soit en assurant sur le corps de l'animal un appui dans la partie ventrale.

Le plan de référence et le plan principal sont sinon confondus, du moins placés parallèlement et à proximité immédiate l'un de l'autre.

Dans une variante de réalisation le gabarit échancré et les mâchoires coupantes sont deux pièces structurellement distinctes l'une de l'autre mais associées solidairement l'une à - et sur - l'autre, parallèlement et à proximité immédiate l'une de l'autre, l'ensemble des deux pièces formant une pince.

Dans une variante de réalisation le gabarit échancré et les mâchoires coupantes sont une seule et même pièce formant une pince, cette pièce assurant d'abord la fonction de détermination de la position de déjointage et, ensuite, la fonction de déjointage proprement dit.

Dans la première variante considérée le plan principal est légèrement décalé par rapport au plan de référence en l'occurrence du côté de la tête de l'animal.

Selon un troisième aspect, l'invention concerne le dispositif de détermination de la position de déjointage, spécialement destiné à faire partie d'une installation de déjointage de la tête d'un animal abattu dont le corps est disposé le long d'un axe principal, à savoir un porc, comprenant :
- un gabarit pourvu d'une échancrure convenable appropriée définissant un plan de référence apte d'une part, à être placé autour du corps de l'animal, à l'extérieur, vers et à partir de sa partie dorsale, dans une position d'approche située dans la zone de la position de déjointage mais à l'écart de celle-ci vers l'arrière de l'animal ; et d'autre part, à être amené en appui mastoïdien, incliné, dans lequel le gabarit est alors positionné de manière que le plan de référence soit incliné par rapport à un plan transversal à l'axe principal d'un angle aigu convenable α, dans le sens allant de la partie ventrale vers la partie dorsale, et des pattes de derrière vers les pattes de devant ou la tête ;
- des moyens support du gabarit et des moyens de déplacement relatif du gabarit par rapport à des moyens support du corps de l'animal entre une position d'attente éloignée et la position d'appui mastoïdien incliné notamment via une position de dégagement et la position d'approche ;
- et des moyens de détection que le gabarit se trouve en position d'appui mastoïdien incliné.

Ce dispositif est spécialement apte et destiné à la mise en oeuvre du procédé de détermination selon le premier aspect de l'invention précédemment décrit.

Les moyens support du gabarit et ses moyens de déplacement relatif sont aptes et agencés à maintenir le gabarit incliné avec l'angle α, respectivement α + Δ α, et à déplacer le gabarit, notamment incliné, en translation le long de l'axe principal ainsi que le long d'un axe transversal, notamment perpendiculaire à lui.

Le dispositif considéré est associé fonctionnellement à des moyens de détermination approximative de la position de déjointage.

Ces moyens de détermination approximative de la position de déjointage sont des moyens de repérage d'un emplacement significatif sur le - ou du - corps de l'animal, tel que l'extrémité libre avant de la tête, ces moyens étant à fonctionnement par voie optique, par contact mécanique, par détecteur de proximité ou équivalent.

Aux moyens de repérage, sont associés des moyens de calcul, notamment programmés, de la position d'approche.

Les moyens support du gabarit autorisent son pivotement d'un angle Δ α par rapport à la position inclinée d'angle α, l'axe de pivotement étant situé à l'écart du corps de l'animal vers la partie dorsale et la tête.

Les moyens de détection que le gabarit se trouve en position d'appui mastoïdien incliné comprennent des moyens tels qu'un capteur ou un contacteur de détection du pivotement du gabarit d'un angle faible Δ α à partir de l'angle d'inclinaison α, le pivotement de l'angle Δ α résultant de l'appui mastoïdien exercé sur le gabarit avec une petite translation des moyens support du gabarit le long de l'axe principal.

Selon un quatrième aspect, l'invention concerne le dispositif de déjointage de tête spécialement destiné à faire partie d'une installation de déjointage, comprenant :
- des mâchoires coupantes définissant un plan principal, aptes d'une part à être placées autour du corps de l'animal, de l'extérieur vers et à partir de sa partie dorsale, dans une position dans laquelle le plan principal est incliné par rapport à un plan transversal, l'axe principal d'un angle aigu convenable α ou α + Δ α, dans le sens allant de la partie ventrale vers la partie dorsale et des pattes de derrière vers les pattes de devant ou la tête ; et d'autre part, à être serrées, grâce à des moyens d'actionnement, de manière à pouvoir sectionner la colonne vertébrale ainsi que, au moins partiellement, la masse musculaire du collier ;
- des moyens support, des moyens de déplacement et des moyens d'actionnement des mâchoires ;
- un dispositif mécanique pour la détermination directe de la position de mise en oeuvre du dispositif de déjointage intégré et le cas échéant pour partie commune au dispositif de déjointage lui-même.

Le dispositif considéré est spécialement apte et destiné à la mise en oeuvre du procédé de déjointage précédemment décrit.

La commande de serrage des mâchoires coupantes en vue du sectionnement souhaité est responsive au blocage d'un gabarit échancré du dispositif pour la détermination de la position de déjointage sur les appuis mastoïdiens, notamment aux moyens de détection du pivotement du gabarit d'un angle Δ α à partir de l'angle d'inclinaison α.

Selon une réalisation, les mâchoires coupantes sont agencées pour sectionner la colonne vertébrale ainsi que partiellement la masse musculaire du collier, uniquement dans la partie dorsale de la tranchée artère.

Selon une réalisation, les mâchoires coupantes sont agencées pour sectionner la colonne vertébrale ainsi que la masse musculaire du collier et ce totalement.

Le dispositif pour la détermination de la position de déjointage auquel est spécialement destiné à être associé le dispositif de déjointage considéré est conforme à la description qui précède.

Selon un cinquième aspect, l'invention concerne une installation de déjointage de la tête d'un animal abattu, à savoir un porc, dont le corps est disposé le long d'un axe principal, comprenant :
- des moyens support du corps de l'animal et des moyens d'entraînement de ceux-ci ;
- un dispositif pour déjointer la tête TE, comportant des mâchoires coupantes et un dispositif de détermination directe de la position de mise en oeuvre du dispositif pour déjointer la tête comportant un gabarit échancré, selon respectivement les descriptions précédentes.

Selon une réalisation les moyens support du corps de l'animal sont agencés pour que ce dernier soit suspendu par les pattes de derrière, la tête dirigée vers le bas, l'axe principal étant vertical ou sensiblement vertical, le plan transversal à cet axe étant horizontal ou sensiblement horizontal.

Selon une variante de réalisation le gabarit échancré et les mâchoires coupantes sont deux pièces structurellement distinctes mais associées solidairement l'une à - et sur - l'autre, les mâchoires de l'animal étant plus proches de la tête que le gabarit du dispositif.

Dans cette variante, les mâchoires coupantes en position d'ouverture ménagent entre elles un espace libre plus grand que celui de l'échancrure, le bord de l'échancrure du gabarit sur lequel est opéré l'appui mastoïdien étant situé dans l'espace libre des mâchoires coupantes dont le bord tranchant est alors protégé par le gabarit.

Selon une autre variante de réalisation le gabarit échancré et les mâchoires coupantes sont deux pièces structurellement distinctes mais associées structurellement solidairement l'une à - et sur - l'autre, le gabarit étant plus proche de la tête de l'animal que les mâchoires du dispositif.

Les moyens support et les moyens de déplacement du gabarit échancré et des mâchoires coupantes sont communs, de même que l'axe de pivotement du gabarit et de l'ensemble formé par les mâchoires coupantes.

Dans une réalisation, l'installation est à poste fixe, les moyens support du corps de l'animal - et le corps lui-même - étant arrêtés pendant la mise en oeuvre des dispositifs de déjointage et pour déterminer la position de déjointage.

Dans une autre réalisation, l'installation est à poste mobile, les moyens support du corps de l'animal - et le corps lui-même - étant mobiles à défilement, notamment horizontal, pendant tout ou partie de la mise en oeuvre des dispositifs de déjointage et pour déterminer la position de déjointage.

L'installation comporte un bâti et, monté sur celui-ci - directement ou indirectement - un chariot de support du gabarit et des mâchoires parallèlement à l'axe principal et transversalement, perpendiculairement à lui, notamment à son plan de défilement.

L'installation comporte également un organe d'appui, notamment fixe, tel qu'une barre profilée, destiné à former un appui pour la partie ventrale du corps de l'animal afin de contribuer à son immobilisation.

Les mâchoires comprennent des bords incurvés tranchants et des parties transversales distales recourbées en pointe, vers l'intérieur, ces parties terminales étant susceptibles de pénétrer ponctuellement et partiellement dans la masse musculaire du collier afin de contribuer à immobiliser le corps.

L'installation incorpore également des moyens de nettoyage du gabarit et de mâchoires, ainsi qu'un carter dans lequel sont placés lors du nettoyage le gabarit, les mâchoires et les moyens de nettoyage.

L'invention sera bien comprise grâce à la description suivante d'une réalisation :
- les figures 1 à 5a sont cinq vues schématiques en élévation de côté montrant différentes étapes du procédé ;

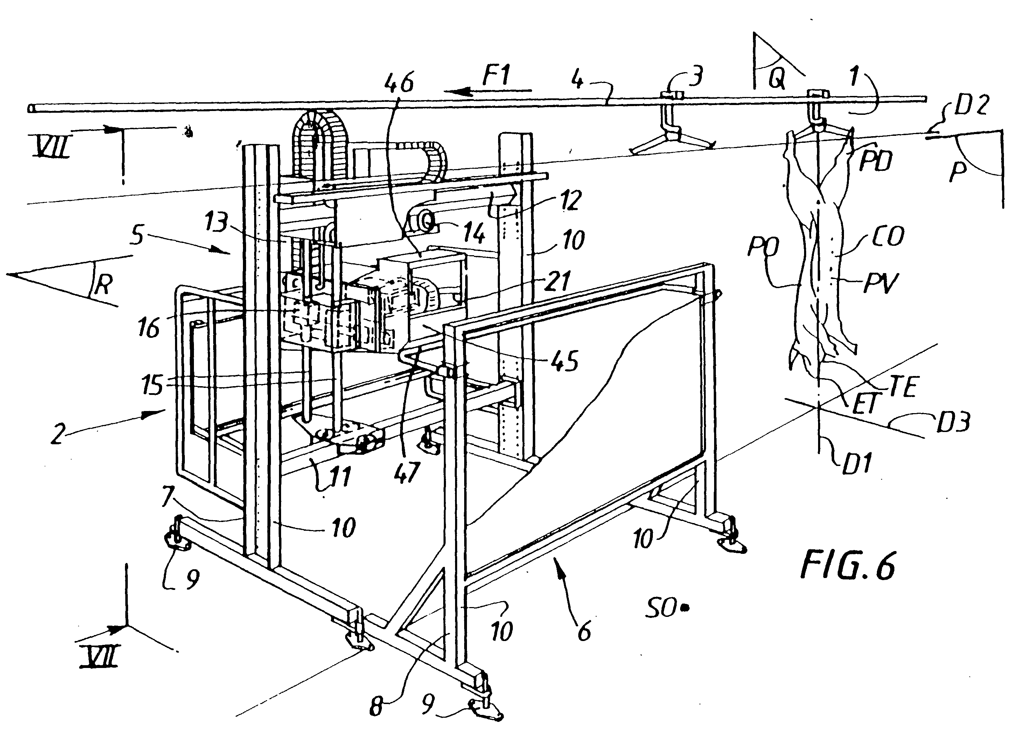

- la figure 6 est une vue en perspective schématique d'une installation ;

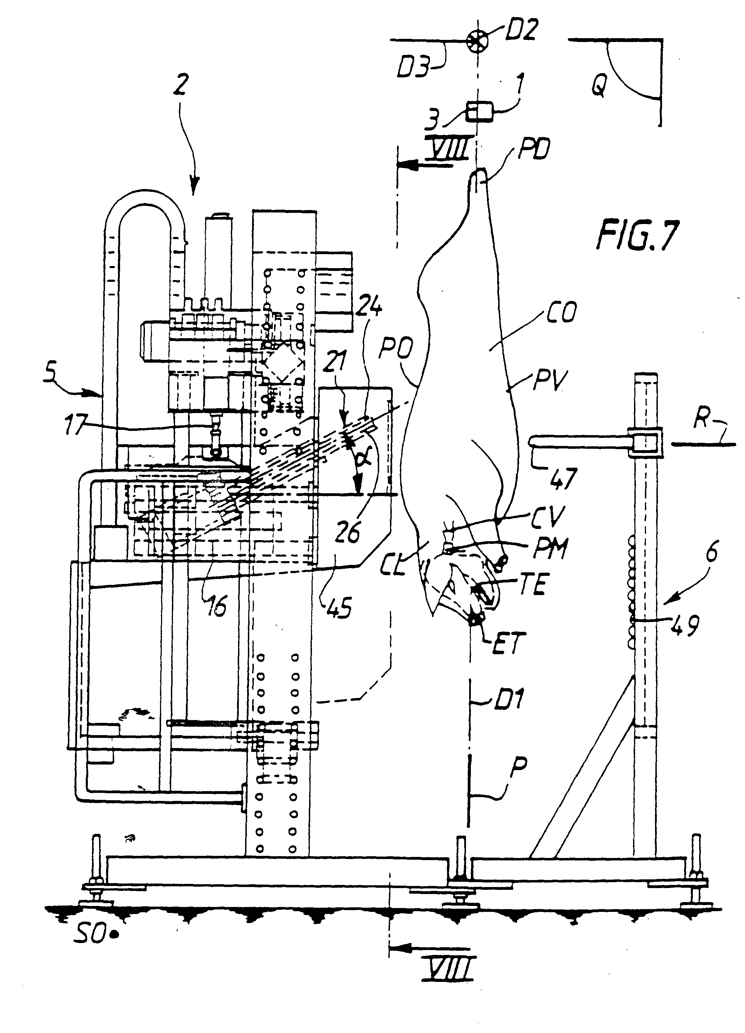

- la figure 7 est une élévation de côté de l'installation selon le plan VII-VII de la figure 6 ;

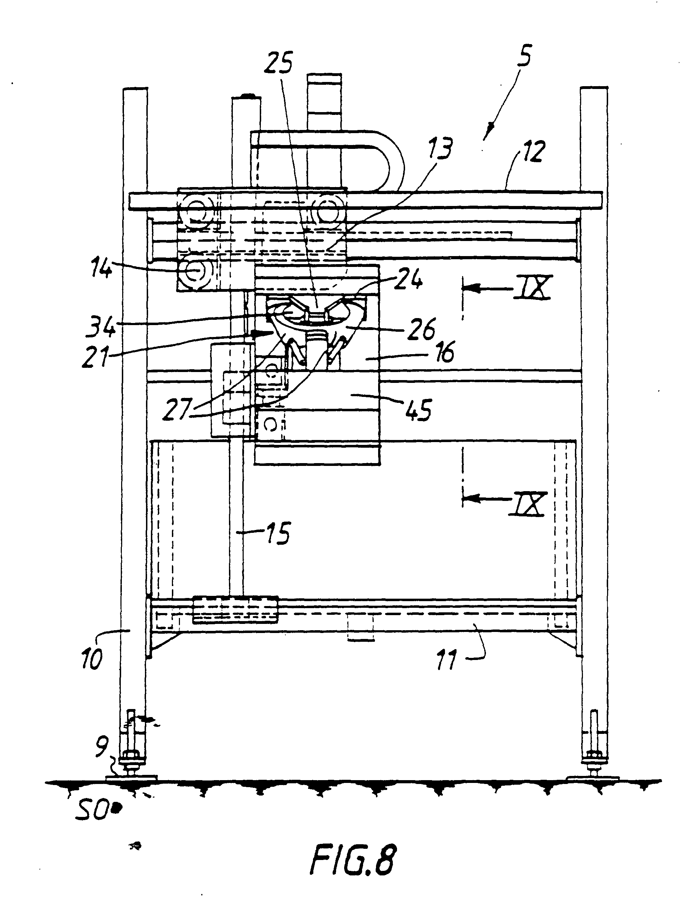

- la figure 8 est une vue en élévation prise selon la ligne VIII-VIII de la figure 7 ;

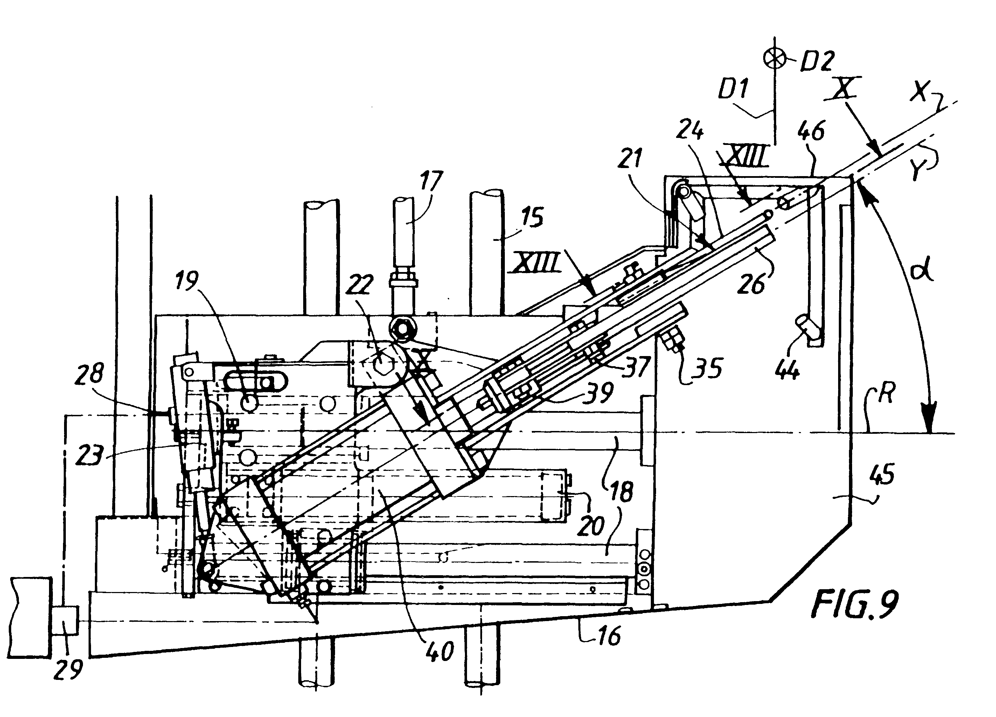

- la figure 9 est une vue partielle, à plus grande échelle, prise selon la ligne IX-IX de la figure 8 illustrant plus spécialement le gabarit et les mâchoires ;

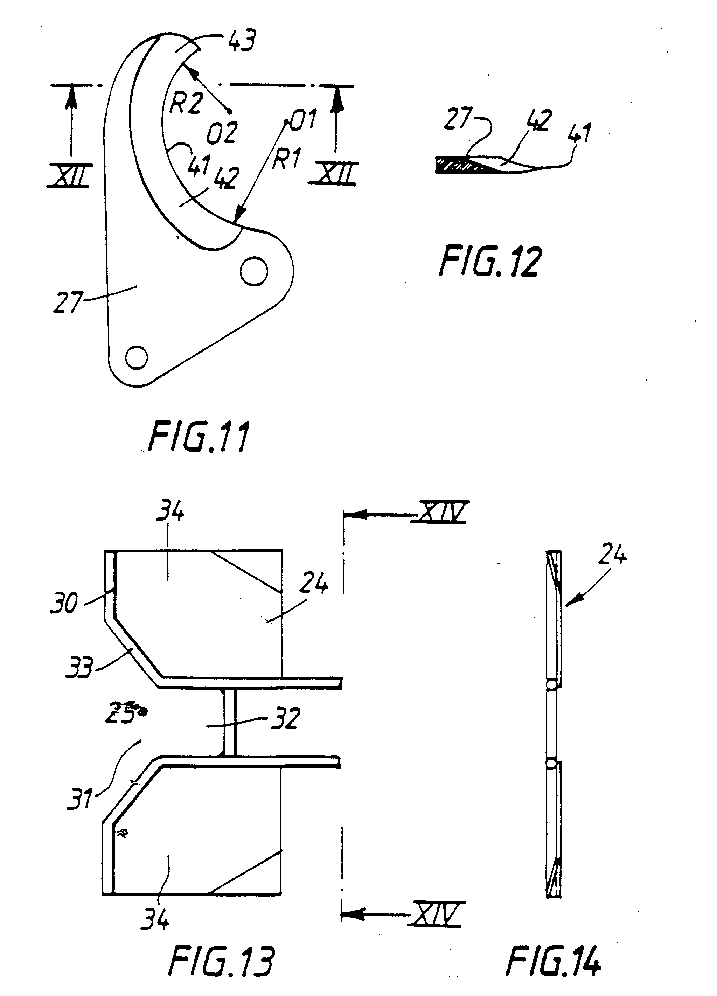

- la figure 10 est une vue en plan partielle prise selon la ligne X-X de la figure 9 illustrant les mâchoires de coupe ;
- la figure 11 est une vue en plan montrant, à plus grande échelle, un mors des mâchoires ;
- la figure 12 est une coupe transversale prise selon la ligne XII-XII de la figure 11 ;
- la figure 13 est une vue en plan prise selon la ligne XIII-XIII de la figure 9 illustrant le gabarit échancré ;
- la figure 14 est une vue transversale du gabarit prise selon la ligne XIV-XIV de la figure 13.

Dans la réalisation considérée, l'animal dont la tête est déjointée est un porc.

Le corps CO de l'animal abattu est suspendu par ses pattes de derrière PD à des moyens support 1 auxquels sont associés au moins fonctionnellement les autres moyens constitutifs d'une installation de déjointage 2.

Le corps CO est allongé le long d'un axe principal, vertical ou sensiblement vertical en l'occurrence, D1.

La tête TE à déjointer est dirigée vers le bas, son extrémité libre avant ET étant placée en position inférieure au-dessus du sol SO supportant l'installation 2.

Le corps CO ainsi allongé a, entre ses extrémités libres inférieure et supérieure où se trouvent les moyens support 1 une longueur totale L.

Dans la réalisation considérée, l'installation 2 est à poste mobile. Le corps CO est supporté par les moyens support 1 de manière à être entraîné à défilement le long d'un axe D2, horizontal et transversal - en l'occurrence perpendiculaire - à l'axe D1.

L'axe de défilement D2 définit un plan vertical P de défilement du corps CO. Ce dernier présente un plan de symétrie principal Q perpendiculaire à P, la partie ventrale PV du corps CO étant située d'un côté du plan P tandis que la partie dorsale PO est située de l'autre côté.

On définit par D3 un axe transversal, horizontal, perpendiculaire à D2, donc situé dans le plan Q.

Les axes D1, D2, D3 définissent un référentiel à trois dimensions.

On définit également par R un plan transversal à l'axe D1, en l'occurrence horizontal ou sensiblement horizontal.

Selon d'autres réalisations, le corps CO est placé différemment de ce qui vient d'être décrit ; et l'installation 2 est à poste fixe, plutôt que mobile, le corps CO étant alors à l'arrêt et non en défilement pendant le déjointage.

On entend ici par déjointage de la tête TE de l'animal, le fait que d'une part la colonne vertébrale CV de l'animal est sectionnée totalement et que, d'autre part le collier CL l'est aussi soit totalement, soit partiellement dans la seule partie dorsale de la trachée artère.

La colonne vertébrale CV est sectionnée vers la tête TE à savoir dans la région cervicale entre la boîte crânienne et la colonne vertébrale, ou entre les vertèbres atlas et axis.

On désigne par PM les protubérances mastoïdiennes du corps CO de l'animal.

Lorsque le sectionnement du collier CL est complet, la tête TE est séparée totalement du restant du corps CO. Lorsque, au contraire, le sectionnement est partiel la tête TE reste associée au restant du corps CO du côté de la partie ventrale PV.

Dans la réalisation plus spécialement décrite par la suite le sectionnement est partiel.

L'installation 2 comporte, outre les moyens support 1 tel qu'un chariot 3 monté à coulissement le long de l'axe D2 le long d'un chemin de guidage 4 grâce à des moyens d'entraînement appropriés, d'une part un premier ensemble 5 de déjointage proprement dit situé du côté du plan P où se trouve de la partie dorsale PO du corps CO et un second ensemble 6 d'appui ventral situé du côté opposé.

Les deux ensembles 5, 6 sont écartés l'un de l'autre, en vis-à-vis, disposés généralement parallèlement au plan P. Ils s'étendent le long de la direction D2, le corps CO étant à défilement pendant le procédé de déjointage. Entre les deux ensembles 5, 6 mais au dessus deux sont disposés et passent les moyens support 1.

Les deux ensembles 5, 6 sont portés par deux bâtis 7, 8 reposant sur le sol SO.

Selon d'autres réalisations, les deux bâtis 7, 8 sont intégrés l'un à l'autre, respectivement supportent également le chemin de guidage 4.

Les bâtis 7, 8 - ou le bâti unique qui les intègre - comporte des parties de repos au sol telles que des pieds 9 et des montants verticaux 10, de part et d'autre, l'un vers l'amont et l'autre vers l'aval par rapport au sens de défilement du corps CO (flèche F1) le long de l'axe D2.

Les montants 10 respectifs sont disposés généralement dans deux plans parallèles à et écartés du plan P.

Les montants 10 du bâti 7 de l'ensemble de déjointage 5 supportent deux traverses horizontales d'axe D2 respectivement basse 11 et haute 12, écartées verticalement et à l'aplomb l'une de l'autre.

Ces traverses 11, 12 supportent à leur tour un ensemble support 13.

L'ensemble support 13 est porté par les traverses 11, 12 afin d'être guidé par elles parallèlement à l'axe de défilement D2.

Il est prévu à cet effet des organes de guidage tels que des galets 14 roulant sur une glissière attenante à chacune des traverses 11, 12, ou aux traverses elles-mêmes.

Il est prévu également des moyens d'entraînement à coulissement le long de l'axe D2, dans un sens ou dans l'autre de l'amont vers l'aval pour accompagner le corps CO lors du déjointage et inversement de l'aval vers l'amont pour le retour en position d'origine.

Ces moyens sont par exemple un couple pignon motorisé-crémaillère interposé entre le bâti 7 et l'ensemble support 13.

L'ensemble support 13 comporte des moyens de guidage vertical parallèlement à l'axe D1, tels que des colonnes 15, supportant un chariot 16.

Le chariot 16 est entraîné à coulissement vertical vers le haut ou vers le bas, avec blocage, sur les colonnes 15 grâce à des moyens d'entraînement appropriés.

Ces moyens d'entraînement comprennent par exemple un vérin hydraulique 17.

Le chariot 16 comporte, à son tour, des glissières horizontales, notamment haute et basse superposées et à l'aplomb, 18. Ces glissières 18 sont parallèles à l'axe D3 et perpendiculaires au plan P.

Une platine 19 s'étendant avec son plan vertical (parallèlement au plan Q) est montée à coulissement horizontal sur les glissières 18.

La platine 19 est entraînée à coulissement horizontal avec blocage, dans une direction parallèle à l'axe D3, soit vers le plan P (flèche F2), soit à l'opposé du plan P (flèche F3).

La platine 19 est entraînée à coulissement avec blocage grâce à des moyens d'entraînement appropriés par exemple un vérin hydraulique 20.

La platine 19 forme une sorte de chariot pouvant être déplacée d'une part horizontalement, soit parallèlement à l'axe de défilement D2, soit transversalement parallèlement à l'axe D3 ; et, d'autre part, verticalement parallèlement à l'axe D1.

Il est entendu que d'autres structures et moyens d'entraînement peuvent être prévus à cette fin. Par exemple, un robot manipulateur.

La platine 19 supporte un ensemble formant pince 21.

Dans la réalisation considérée, la pince 21 est montée sur la platine 19 autour d'un axe support et de pivotement 22 parallèle à l'axe D2.

Il est prévu un organe 23 du type élastique précontraint interposé entre la pince 21 et la platine 19 à l'écart du plan P et de l'axe 22.

L'organe 23 est tel que, en l'absence de sollicitation extérieure suffisante sur la pince 21, celle-ci reste dans une certaine position donnée et connue sur la platine 19.

Si la sollicitation dépasse la valeur de précontrainte, la pince 21 peut alors être déplacée à pivotement autour de l'axe 22.

Ce déplacement est limité toutefois, à un angle faible Δ α de l'ordre de 5 à 10° environ, voire même moins.

La sollicitation extérieure qui permet le pivotement est celle qui résulte d'un appui sur la protubérance mastoïdienne ainsi qu'il est mentionné.

La limitation du pivotement Δ α est réalisée au moyen de butées appropriées ou de toute autre manière convenable.

La pince 21 comprend, dans la réalisation considérée ici, d'une part un gabarit 24 pourvu d'une échancrure 25 et d'autre part des mâchoires 26 coupantes comprenant deux mors 27.

Le gabarit 24 et les mâchoires 26 forment dans la réalisation considérée deux pièces structurellement distinctes l'une de l'autre mais associées solidairement l'une à -et sur- l'autre, parallèlement et à proximité immédiate l'une de l'autre.

Dans une autre réalisation, le gabarit 24 et les mâchoires 26 forment une seule et même pièce assurant successivement les deux fonctions souhaitées.

Dans la réalisation considérée où la pince est à deux pièces 24, 26 associées, le gabarit 24 est disposé en position supérieure et les mâchoires en position inférieure, les deux étant l'un contre l'autre.

Le gabarit 24 définit un plan de référence X et les mâchoires 26 un plan principal Y.

Les deux plans X et Y sont donc sinon confondus lorsque le gabarit 24 et les mâchoires 26 sont eux-mêmes confondus, du moins placés parallèlement et à proximité immédiate l'un de l'autre.

En l'occurrence, le plan principal Y est décalé légèrement par rapport au plan de référence X, vers le bas, c'est-à-dire du côté de la tête TE de l'animal.

Dans une autre réalisation, la disposition est inverse, le gabarit 24 et le plan X étant en position inférieure et les mâchoires 26 et le plan Y en position supérieure.

Quoi qu'il en soit, les plans X et Y sont d'une part parallèles à l'axe D2, et d'autre part au plan transversal R avec un angle α ou α + Δ α lorsqu'intervient le pivotement supplémentaire à l'encontre de l'organe précontraint 23.

L'inclinaison α est celle qui résulte de la mise sous contrainte par l'organe 23.

Cette inclinaison α, respectivement α + Δ α, est celle qui est maintenue en permanence pendant le procédé et la mise en oeuvre de l'installation et des dispositifs qu'elle comporte.

L'inclinaison α est telle que la pince 21 ait son extrémité la plus éloignée du plan P -vers l'organe 23-inférieure, et les bords extrêmes libres des gabarit 24 et mâchoires 26 les plus proches du plan P dirigés vers le corps CO, supérieurs.

Ce faisant, l'inclinaison est dans le sens allant de la partie ventrale PV vers la partie dorsale PO, et des pattes de derrière PD vers les pattes de devant ou la tête TE.

Il est prévu également des moyens 28 de détection du pivotement Δ α de la pince 21 tel qu'un capteur ou un contacteur.

Ces moyens 28 sont, dans la réalisation considérée associés à l'organe précontraint 23.

Le capteur des moyens 28 peut être responsif par exemple à la pression ou à la position.

Les moyens 28 sont couplés, de manière à activer un automate 29.

Il peut être prévu en variante des moyens équivalents propres d'une part à détecter l'appui mastoïdien éventuellement sans la nécessité du pivotement Δ α et, en réponse, à commander les mâchoires de coupe 26.

On choisit l'angle α entre 10 et 45° environ, plus spécialement entre 15 et 25° environ, notamment égal à ou de l'ordre de 20°.

Le gabarit 24, dans la réalisation considérée, comporte une armature métallique 30 délimitant l'échancrure 25 ayant une ouverture distale élargie 31 et un fond proximal plutôt rétréci 32.

Le gabarit 24 est généralement plat.

Son bord distal et celui limitant l'échancrure 25, soit 33, est recourbé.

A ce bord sont attenants, de part et d'autre de l'échancrure 25, deux panneaux 34 formant des espèces d'ailes.

L'ouverture élargie 31 permet d'amener le gabarit 24 avec son échancrure 25 autour du corps CO, à l'extérieur, vers et à partir de la partie dorsale PO, jusqu'au fond 32.

Cette forme et la dimension appropriée de l'échancrure 25 permettent non seulement la mise en place du gabarit autour du corps CO là ou cela est souhaité, mais aussi de guider et de contribuer à immobiliser le corps lors de la mise en oeuvre du procédé et, enfin, de permettre aux panneaux 34 de venir en appui mastoïdien.

Celui-ci est qualifié d'incliné en référence à l'angle α.

Les mâchoires 26 comportent deux mors coupant ou tranchant 27.

Ces mors 27 sont montés à pivotement autour d'un axe commun 35 sur une pièce support 36.

D'autre part, les mors sont articulés en 37 à des biellettes 38 elles-mêmes articulées en 39.

Aux mors 27 sont associés des moyens de déplacement linéaire dans un sens ou dans l'autre, en l'occurrence en vérin 40 tel qu'un vérin hydraulique à simple effet et à rappel élastique.

Quoi qu'il en soit, cette disposition est telle que l'actionnement du vérin dans un sens ou dans l'autre assure l'ouverture, respectivement la fermeture ou serrage des mors 27.

Au repos, les mors 27 sont le plus écartés.

Le cas échéant, il est prévu des moyens de réglage de la course d'ouverture-fermeture des mors 27.

Chaque mors 27 comporte, à partir de l'axe 35, une branche utile dont la longueur est choisie en relation avec la moyenne statistique morphologique des animaux traités, pour que l'ouverture axiale qu'elle délimite avec la branche homologue, dans la position d'ouverture, soit sensiblement égale, voire légèrement supérieure, à la mesure d comprise entre la face externe dorsale du collier CL et la colonne vertébrale CV.

En conséquence, les mâchoires 26 sont incapables d'enserrer la totalité du collier CL dans la position d'ouverture et/ou de fermeture qui s'ensuit.

Chaque branche 34 comporte une arête tranchante 41 qui est ménagée sur toute la longueur utile par l'intermédiaire d'un biseau 42. En outre, chaque branche est conformée de manière à comporter une partie terminale distale 43 recourbée vers l'intérieur en direction de la partie terminale de la branche homologue. Le biseau 42 est aussi ménagé sur la partie terminale 43, de manière à conférer à chacune d'elles la forme d'une corne ou d'un coin. La conformation des parties terminales 43 est choisie pour que l'extrémité de chacune, tournée vers celle du mors homologue, soit formée par une pointe.

Chaque branche est aussi réalisée de manière que son arête tranchante 41 se présente sous forme d'une courbure concave continue, définie, par exemple, par un rayon de courbure R1 de centre O1 pour la majeure partie de l'arête et par un rayon de courbure R2 de centre O2 pour ce qui concerne la partie terminale distale 43.

Dans la réalisation qui est considérée, les moyens support et les moyens de déplacement du gabarit 24 et des mâchoires 26 sont communs, sauf en ce qui concerne le vérin 40 dédié aux seules mâchoires 26. De même, l'axe 22 est commun.

Les mâchoires coupantes 26 en position d'ouverture ménagent entre elles un espace libre plus grand que celui de l'échancrure 25, le bord de l'échancrure du gabarit 24 sur lequel est opéré l'appui mastoïdien étant situé dans l'espace libre des mâchoires 26 dont le bord tranchant 41 est alors protégé par le gabarit 24.

Il est prévu en outre que l'installation 2 comporte des moyens de nettoyage 44 tels qu'une rampe de projection d'un liquide de nettoyage sous pression, branchée sur une amenée de liquide de nettoyage et d'air comprimé.

Cette rampe 44 est placée dans un carter 45 porté par la platine 19 et comportant une fenêtre 46 permettant le passage de la pince 21.

Lors du nettoyage, la pince 21, à savoir le gabarit 24 et les mâchoires 26, sont logés dans le carter 45.

De la sorte, le nettoyage peut intervenir en situation d'escamotage de la pince 21.

Le carter 45 comprend une récupération de liquide souillé, ensuite évacué.

L'ensemble 6 comprend un organe d'appui en forme de barre profilée 47 de direction D2 destiné à former un appui pour la partie ventrale PV.

Cette barre 47 est donc placée à hauteur appropriée.

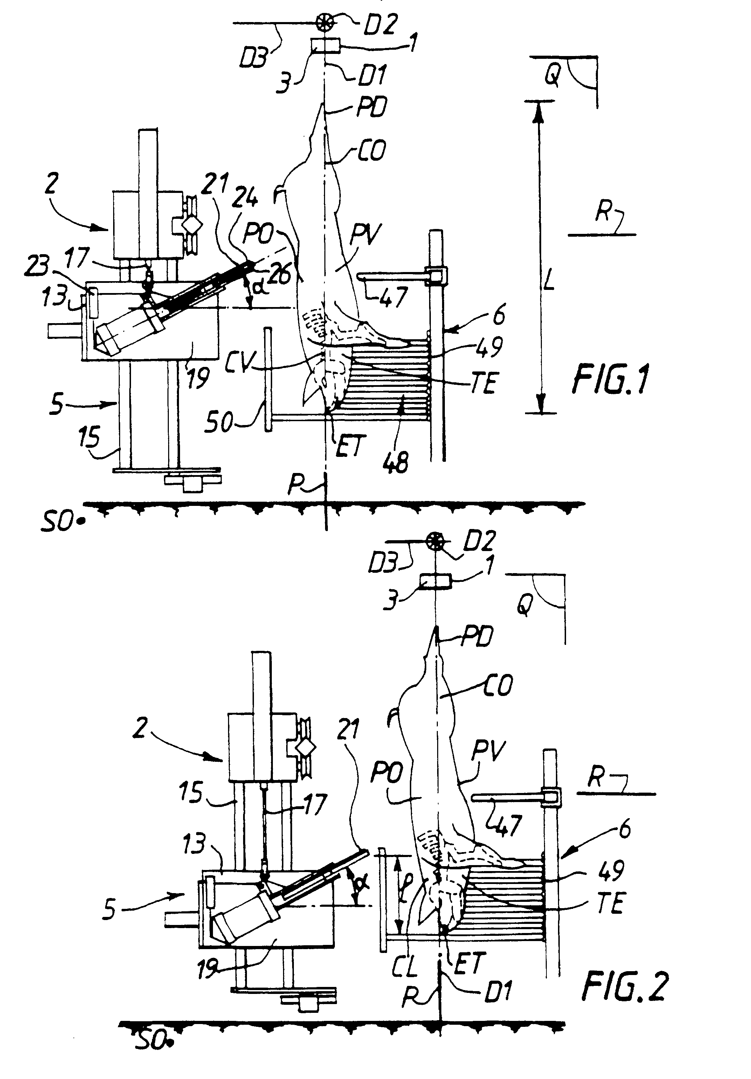

Le procédé mis en oeuvre est illustré par les figures 1 à 5.

En figure 1, le corps CO de l'animal dont la tête est à déjointer, arrive dans l'installation, en amont.

La pince 21 est elle aussi en amont, en regard du corps CO. Elle a l'inclinaison α.

Par la suite, le corps CO supporté par les moyens 1 et la pince 21 sont déplacés en synchronisme vers et jusqu'à l'aval de l'installation.

Au départ, les mâchoires 26 sont ouvertes.

La pince 21 et alors dans une position d'attente. Celle-ci est éloignée non seulement de la position de déjointage mais aussi du corps CO.

Dans cette situation, la pince est inclinée avec l'angle α, dans le sens précédemment mentionné.

La position d'attente est supérieure. Elle permet, le cas échéant, le nettoyage.

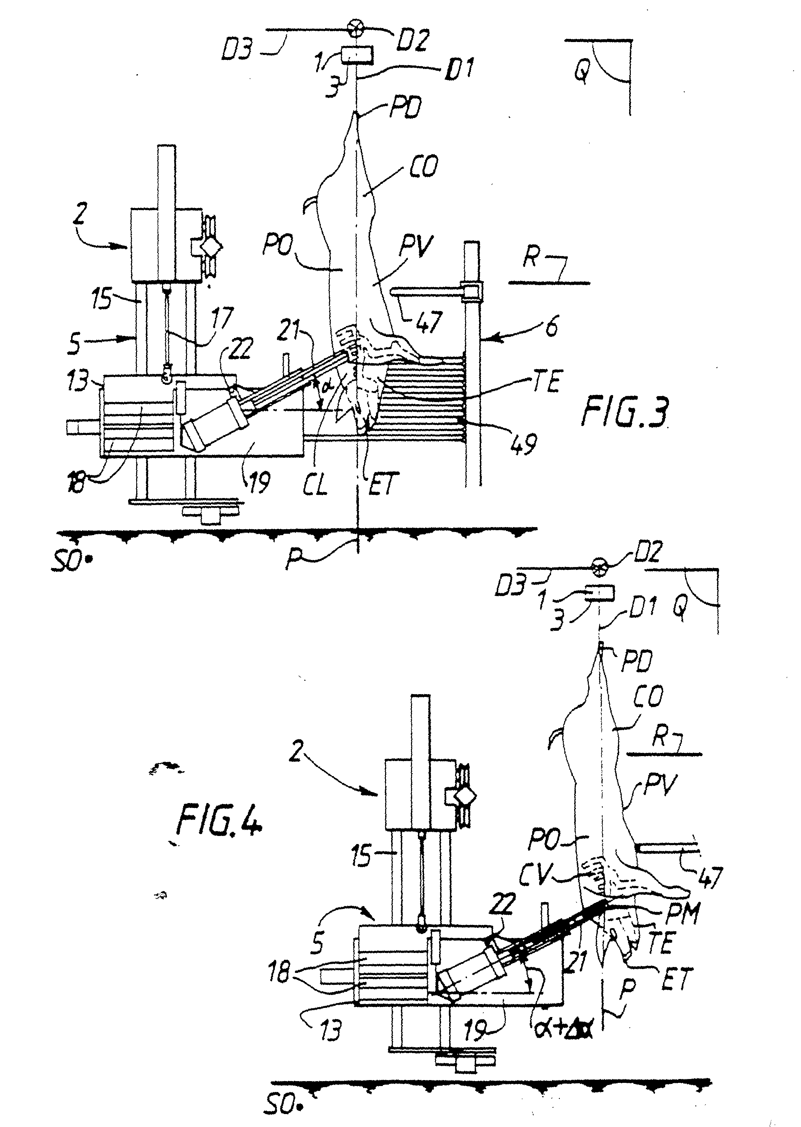

Grâce aux moyens d'entraînement prévus à cet effet, la pince 21 est, nonobstant le défilement le long de l'axe D2, entraînée d'abord verticalement et vers le bas parallèlement à l'axe D1 jusqu'à une position de dégagement (figure 2) puis horizontalement jusqu'à une position d'attente (figure 3).

Lors du mouvement vertical descendant, la pince 21 n'interfère pas avec le corps CO.

Lors du mouvement horizontal vers le plan P et le corps CO, le gabarit 24 vient se placer, par l'échancrure 25 autour du corps CO.

A partir de la position d'attente (figure 3), on poursuit le mouvement de coulissement de la pince 21 vers le bas jusqu'à l'appui mastoïdien sur le gabarit interférant avec la protubérance mastoïdienne dans l'ouverture des mâchoires 26.

On continue sur une très faible course le mouvement de coulissement vertical descendant de sorte que le gabarit 24 -et donc l'ensemble de la pince 21- pivote de l'angle α.

Ce pivotement Δα ou, autrement l'appui mastoïdien active le capteur 28.

Celui-ci commande l'automate 29 qui, à son tour, commande le vérin 40.

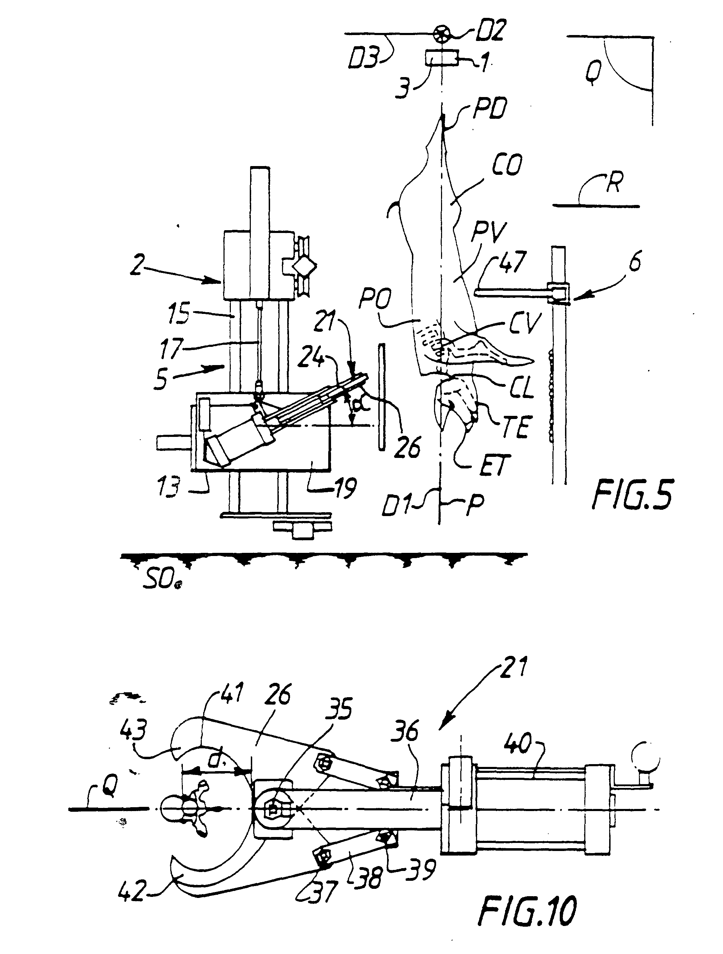

Les mâchoires 26 sont serrées et assurent le sectionnement voulu à l'emplacement optimal souhaité (figure 4). Ce sectionnement intervient, par conséquent une fois, notamment immédiatement ou juste après que le gabarit 24 ait permis de déterminer la position de déjointage.

Il est à noter que pour le sectionnement avec les mâchoires 26 on immobilise ou tend à immobiliser - au défilement selon l'axe D2 près - le corps CO.

Cette immobilisation est réalisée grâce aux parties terminales distales 43 pénétrant ponctuellement et partiellement dans la masse musculaire du collier et grâce à la barre d'appui 47. D'autre part le gabarit 24 contribue lui aussi à l'immobilisation.

Ensuite (figure 5) la pince 21 peut être dégagée par un mouvement horizontal en s'éloignant du corps CO jusqu'à venir à l'aplomb de la position de dégagement.

La pince peut alors revenir à la position de dégagement.

Pendant tout le procédé, la pince a gardé son inclinaison α, respectivement α + Δ α.

Selon un autre aspect de l'invention, il est prévu une étape préliminaire de détermination approximative de la position de déjointage, de manière à déterminer la position d'approche afin que le déplacement du gabarit 24 de la position d'approche à la position d'appui mastoïdien incliné soit limité, par exemple à quelques centimètres.

A cet effet, on repère d'abord l'extrémité libre avant ET de la tête TE.

Ce repérage peut être réalisé par voie optique, dans la réalisation considérée mais pourrait aussi être réalisée par contact mécanique, par détecteur de proximité, ou équivalent.

Ayant repéré la position de l'extrémité libre avant ET de la tête TE, on en déduit la longueur L du corps de l'animal et on calcule en conséquence l'emplacement de la position d'approche.

Les moyens 48 de détection par voie optique sont, par exemple, une batterie 49 de cellules optiques, vers l'ensemble 6 en vis-à-vis d'une barrière 50 de réflecteurs, vers l'ensemble 5.

La cellule de plus haut niveau dont le faisceau n'est pas occulté détermine la longueur L. Celle-ci peut varier, par exemple, de 1,55 m à 2 m.

Dans une telle situation, la position d'approche est par exemple située entre 240 mm et 310 mm au-dessus de l'extrémité libre ET.

## Revendications

1. Procédé pour déterminer sur le corps (CO) d'un animal abattu, à savoir un porc, disposé le long d'un axe principal (D1), la position optimale de mise en oeuvre d'un dispositif de déjointage -dite position de déjointage- dans lequel :
- on met en oeuvre un dispositif mécanique de détermination directe de la position de déjointage, comprenant un gabarit échancré (24) définissant un plan de référence ;
- on place le gabarit (24) avec son échancrure autour d'une partie au moins du corps de l'animal, à l'extérieur, vers et à partir de sa partie dorsale, dans une position d'approche située dans la zone de la position de déjointage mais à l'écart de celle-ci vers l'arrière de l'animal ;
- depuis la position d'approche on amène le gabarit (24) en appui mastoïdien incliné, de manière que le plan de référence soit incliné par rapport à un plan transversal à l'axe principal, d'un angle aigu convenable α, dans le sens allant de la partie ventrale vers la partie dorsale, et des pattes de derrière vers les pattes de devant ou la tête.

2. Procédé selon la revendication 1, **caractérisé en ce qu'**on choisit l'angle α entre 10 et 45° environ, plus spécialement entre 15 et 25° environ, notamment égal à ou de l'ordre de 20°.

3. Procédé selon l'une quelconque des revendications 1 ou 2, **caractérisé en ce qu'**on choisit l'échancrure du gabarit (24) de manière que celui-ci soit placé sans serrage ou sans serrage excessif du corps, afin de pouvoir opérer son déplacement relatif par rapport au corps de l'animal de la position d'approche jusqu'à la position d'appui mastoïdien incliné, sans dégradation substantielle du corps de l'animal.

4. Procédé selon l'une quelconque des revendications 1 à 3, **caractérisé en ce que** le déplacement relatif du gabarit (24) par rapport au corps de l'animal jusqu'à la position d'appui mastoïdien incliné est essentiellement une translation le long de l'axe principal et en direction de la tête.

5. Procédé selon l'une des revendications 1 à 4, **caractérisé en ce que** pour arriver à la position d'approche, on opère un déplacement relatif du gabarit (24) par rapport au corps, transversalement à l'axe principal, à partir d'une position de dégagement située à l'écart du corps et du côté de sa partie dorsale ; et **en ce que** ledit déplacement est essentiellement une translation perpendiculaire ou sensiblement perpendiculaire à l'axe principal.

6. Procédé selon l'une des revendications 1 à 5, **caractérisé en ce qu'**il comporte une étape préliminaire de détermination approximative de la position de déjointage, de manière à déterminer la position d'approche afin que le déplacement du gabarit (24) de la position d'approche à la position d'appui mastoïdien incliné soit limité.

7. Procédé selon la revendication 6, **caractérisé en ce que** pour réaliser la détermination approximative de la position de déjointage, on repère d'abord un emplacement significatif sur le - ou du - corps de l'animal ; plus spécialement l'extrémité libre avant de la tête.

8. Procédé selon la revendication 7, **caractérisé en ce qu'**on repère la position de l'extrémité libre avant de la tête de l'animal par voie optique, par contact mécanique, par détecteur de proximité, ou équivalent.

9. Procédé selon la revendication 7 ou 8, **caractérisé en ce qu'**ayant repéré la position de l'extrémité libre avant de la tête de l'animal, on en déduit la longueur du corps de l'animal et on calcule en conséquence l'emplacement de la position d'approche.

10. Procédé selon l'une des revendications 1 à 9, **caractérisé en ce qu'**on part d'une position d'attente où le gabarit (24) est éloigné de la position de déjointage et du corps de l'animal, vers l'arrière ; on amène le gabarit (24), d'échancrure (25) appropriée, convenablement incliné avec l'angle α dans la position de dégagement, notamment par une translation axiale ; on opère ensuite le déplacement relatif transversal du gabarit (24) par rapport au corps de l'animal de la position de dégagement à la position d'approche ; on opère enfin une translation axiale relative du gabarit (24) par rapport au corps de l'animal vers la tête jusqu'à la position d'appui mastoïdien incliné.

11. Procédé selon l'une des revendications 1 à 10, **caractérisé en ce qu'**on détermine la position d'appui mastoïdien incliné par suite du blocage exercé par les protubérances mastoïdiennes du corps de l'animal sur le gabarit (24) d'échancrure (25) appropriée.

12. Procédé selon l'une des revendications 1 à 11, **caractérisé en ce que**, une fois que le gabarit (24) est amené en position d'appui mastoïdien incliné, on opère un mouvement supplémentaire relatif limité du gabarit (24) par rapport au corps de l'animal, en direction de la tête.

13. Procédé selon la revendication 12, **caractérisé en ce que** lors du mouvement supplémentaire relatif, on fait pivoter le gabarit (24) d'un angle faible **Δα,** dans le sens de l'augmentation de l'angle α, autour d'un axe de pivotement du gabarit (24) situé à l'écart du corps de l'animal vers la partie dorsale et la tête.

14. Procédé selon la revendication 13, **caractérisé en ce que** l'angle 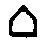 α est compris entre 5 et 10° environ.

15. Procédé selon l'une quelconque des revendications 1 à 14, **caractérisé en ce que** la course du gabarit (24) entre la position d'approche et la position d'appui mastoïdien incliné est de l'ordre de ou inférieure à, quelques centimètres.

16. Procédé selon l'une quelconque des revendications 1 à 15, **caractérisé en ce que** l'inclinaison du plan de référence du gabarit (24) reste constante ou sensiblement constante pendant tout le déroulement du procédé.

17. Procédé selon l'une quelconque des revendications 1 à 16, **caractérisé en ce qu'**on règle l'angle α en fonction de la morphologie du corps de l'animal.

18. Procédé selon l'une quelconque des revendications 1 à 17, **caractérisé en ce que** l'on met en oeuvre un dispositif de détermination de la position de déjointage intégré et le cas échéant pour partie commun au dispositif de déjointage lui-même.

19. Procédé selon l'une quelconque des revendications 1 à 18, **caractérisé en ce que** lors des déplacements relatifs du gabarit (24) par rapport au corps de l'animal en vue de la mise en oeuvre du procédé, on déplace essentiellement le gabarit (24), sans préjudice d'un déplacement du corps de l'animal à défilement transversal.

20. Procédé selon l'une quelconque des revendications 1 à 19, **caractérisé en ce que** l'on suspend le corps de l'animal tête en bas, l'axe principal étant sensiblement vertical, le plan transversal à l'axe principal étant sensiblement horizontal, le gabarit (24) étant incliné de manière que l'échancrure (25) ait son ouverture dirigée vers le haut.

21. Procédé pour déjointer la tête d'un animal abattu, à savoir un porc, dont le corps est disposé le long d'un axe principal, dans lequel :
- on met en oeuvre un dispositif mécanique de déjointage de tête comprenant des mâchoires (26) coupantes définissant un plan principal ;
- on détermine directement sur le corps de l'animal la position optimale de positionnement du dispositif de déjointage, grâce à un dispositif de détermination de la position de déjointage, cette position de déjointage étant telle que le plan principal soit incliné par rapport à un plan transversal à l'axe principal d'un angle aigu convenable égal ou voisin de α, dans le sens allant de la partie ventrale vers la partie dorsale et des pattes de derrière vers les pattes de devant ou la tête ;
- on positionne le dispositif de déjointage dans la position de déjointage et dans cette position on l'actionne ;
- on met en oeuvre un dispositif mécanique de détermination de la position de déjointage comprenant un gabarit (24) échancré, intégré et le cas échéant pour partie commun, au dispositif de déjointage lui-même ;

22. Procédé pour déjointer la tête d'un animal abattu, à savoir un porc, dont le corps est disposé le long d'un axe principal, dans lequel :
- on met en oeuvre un dispositif mécanique de déjointage de tête comprenant des mâchoires (26) coupantes définissant un plan principal ;
- on détermine directement sur le corps de l'animal la position optimale de positionnement du dispositif de déjointage par le procédé selon l'une des revendications 1 à 20 grâce au dispositif de détermination de la position de déjointage, le plan principal étant incliné par rapport à un plan transversal à l'axe principal d'un angle aigu convenable égal ou voisin de α, dans le sens allant de la partie ventrale vers la partie dorsale et des pattes de derrière vers les pattes de devant ou la tête ;
- on positionne le dispositif de déjointage dans la position de déjointage et, dans cette position, on l'actionne.

23. Procédé selon l'une quelconque des revendications 21 ou 22, **caractérisé en ce que** l'on actionne le dispositif de déjointage en serrant sur le corps de l'animal les mâchoires (26) coupantes une fois, notamment immédiatement après, que le gabarit (24) ait permis de déterminer la position de déjointage.

24. Procédé selon l'une des revendications 21 à 23, **caractérisé en ce qu'**on commande le dispositif de déjointage -à savoir les mâchoires (26) coupantes- à partir du blocage exercé sur le gabarit (24) par les protubérances mastoïdiennes, respectivement par le pivotement supplémentaire Δα du gabarit (24), respectivement des mâchoires (26) coupantes.

25. Procédé selon l'une quelconque des revendications 21 à 24, **caractérisé en ce qu'**on déjointe la tête en sectionnant la colonne vertébrale ainsi que la masse musculaire du collier, partiellement, uniquement dans la partie dorsale de la trachée artère, la tête demeurant associée à la partie restante du corps de l'animal par la partie ventrale.

26. Procédé selon l'une quelconque des revendications 21 à 24, **caractérisé en ce qu'**on déjointe la tête en sectionnant la colonne vertébrale ainsi que la masse musculaire et ce totalement, la tête étant alors totalement dissociée de la partie restante du corps de l'animal.

27. Procédé selon l'une quelconque des revendications 21 à 26, **caractérisé en ce que**, avant que de sectionner la colonne vertébrale et la masse musculaire du collier, on immobilise substantiellement le corps de l'animal au moins relativement par rapport aux mâchoires (26) coupantes.

28. Procédé selon la revendication 27, **caractérisé en ce qu'**on contribue à immobiliser le corps de l'animal au moyen du gabarit (24) et/ou des mâchoires (26) coupantes, ces dernières ayant des parties terminales distales (43) recourbées en pointe vers l'intérieur, pénétrant ponctuellement et partiellement dans la masse musculaire du collier.

29. Procédé selon la revendication 27, **caractérisé en ce qu'**on contribue à immobiliser le corps de l'animal en assurant sur lui un appui dans la partie ventrale.

30. Procédé selon l'une quelconque des revendications 21 à 29, **caractérisé en ce que** le plan de référence et le plan principal sont sinon confondus du moins placés parallèlement et à proximité immédiate l'un de l'autre.

31. Procédé selon l'une quelconque des revendications 21 à 30, **caractérisé en ce que** le gabarit (24) échancré et les mâchoires (26) coupantes sont deux pièces structurellement distinctes l'une de l'autre mais associées solidairement l'une à - et sur - l'autre, parallèlement et à proximité immédiate l'une de l'autre, l'ensemble des deux pièces formant une pince (21).

32. Procédé selon l'une quelconque des revendications 21 à 30, **caractérisé en ce que** le gabarit (24) échancré et les mâchoires (26) coupantes sont une seule et même pièce formant une pince (21), cette pièce assurant d'abord la fonction de détermination de la position de déjointage et, ensuite, la fonction de déjointage proprement dit.

33. Procédé selon la revendication 30, **caractérisé en ce que** le plan principal est légèrement décalé par rapport au plan de référence du côté de la tête de l'animal.

34. Dispositif de détermination directe de la position de mise en oeuvre d'un dispositif de déjointage de tête, dite position de déjointage, spécialement destiné à faire partie d'une installation de déjointage de la tête d'un animal abattu dont le corps est disposé le long d'un axe principal, à savoir un porc, comprenant :
- un gabarit (24) pourvu d'une échancrure (25) convenable appropriée définissant un plan de référence apte d'une part, à être placé autour du corps de l'animal, à l'extérieur, vers et à partir de sa partie dorsale, dans une position d'approche située dans la zone de la position de déjointage mais à l'écart de celle-ci vers l'arrière de l'animal ; et d'autre part, à être amené en appui mastoïdien incliné, dans lequel le gabarit (24) est alors positionné de manière que le plan de référence soit incliné par rapport à un plan transversal à l'axe principal d'un angle aigu convenable α, dans le sens allant de la partie ventrale vers la partie dorsale, et des pattes de derrière vers les pattes de devant ou la tête ;
- des moyens support du gabarit (24) et des moyens de déplacement relatif du gabarit (24) par rapport à des moyens support (1) du corps de l'animal entre une position d'attente éloignée et la position d'appui mastoïdien incliné notamment via une position de dégagement et la position d'approche ;
- et des moyens de détection que le gabarit se trouve en position d'appui mastoïdien incliné.

35. Dispositif selon la revendication 34, **caractérisé en ce qu'**il est spécialement apte et destiné à la mise en oeuvre du procédé selon l'une quelconque des revendications 1 à 20.

36. Dispositif selon l'une quelconque des revendications 34 ou 35, **caractérisé en ce que** les moyens support du gabarit (24) et ses moyens de déplacement relatif sont aptes et agencés à maintenir le gabarit (24) incliné avec l'angle α, respectivement α + Δα, et à déplacer le gabarit (24), notamment incliné, à translation le long de l'axe principal ainsi que le long d'un axe transversal, notamment perpendiculaire à lui.

37. Dispositif selon l'une quelconque des revendications 34 à 36, **caractérisé en ce qu'**il est associé fonctionnellement à des moyens de détermination approximative de la position de déjointage.

38. Dispositif selon la revendication 37, **caractérisé en ce que** les moyens de détermination approximative de la position de déjointage sont des moyens de repérage d'un emplacement significatif sur le - ou du - corps de l'animal, tel que l'extrémité libre avant de la tête, ces moyens étant à fonctionnement par voie optique, par contact mécanique, par détecteur de proximité ou équivalent.

39. Dispositif selon la revendication 38, **caractérisé en ce que**, aux moyens de repérage, sont associés des moyens de calcul, notamment programmés, de la position d'approche.

40. Dispositif selon l'une quelconque des revendications 34 à 39, **caractérisé en ce que** les moyens support du gabarit (24) autorisent son pivotement d'un angle Δα par rapport à la position inclinée d'angle α, l'axe de pivotement étant situé à l'écart du corps de l'animal vers la partie dorsale et la tête.

41. Dispositif selon l'une quelconque des revendications 34 à 40, **caractérisé en ce que** les moyens de détection que le gabarit (24) se trouve en position d'appui mastoïdien incliné comprennent des moyens tels qu'un capteur ou un contacteur de détection du pivotement du gabarit (24) d'un angle faible Δα à partir de l'angle d'inclinaison α, le pivotement de l'angle Δα résultant de l'appui mastoïdien exercé sur le gabarit (24) avec une petite translation des moyens support du gabarit (24) le long de l'axe principal.

42. Dispositif de déjointage de la tête d'un animal abattu, à savoir un porc, dont le corps est disposé le long d'un axe principal, spécialement destiné à faire partie d'une installation de déjointage, comprenant :
- des mâchoires (26) coupantes définissant un plan principal, aptes d'une part à être placées autour du corps de l'animal, de l'extérieur, vers et à partir de sa partie dorsale, dans une position dans laquelle le plan principal est incliné par rapport à un plan transversal à l'axe principal d'un angle aigu convenable α ou α + Δα, dans le sens allant de la partie ventrale vers la partie dorsale et des pattes de derrière vers les pattes de devant ou la tête ; et d'autre part, à être serrées, grâce à des moyens d'actionnement (40), de manière à pouvoir sectionner la colonne vertébrale ainsi que, au moins partiellement, la masse musculaire du collier ;
- des moyens support, des moyens de déplacement et des moyens d'actionnement des mâchoires (26) ;
- un dispositif mécanique pour la détermination directe de la position de mise en oeuvre du dispositif de déjoimtage comprenant un gabarit (24) échancré, intégré et le cas échéant pour partie commun au dispositif de déjointage lui-même.

43. Dispositif selon la revendication 42, **caractérisé en ce qu'**il est spécialement apte et destiné à la mise en oeuvre du procédé selon l'une quelconque des revendications 21 à 33.

44. Dispositif selon l'une quelconque des revendications 42 ou 43, **caractérisé en ce que** la commande de serrage des mâchoires coupantes en vue du sectionnement souhaité est responsive au blocage d'un gabarit (24) échancré du dispositif pour la détermination de la position de déjointage sur les appuis mastoïdiens.

45. Dispositif selon la revendication 44, **caractérisé en ce que** la commande de serrage des mâchoires (26), coupantes, est responsive aux moyens de détection du pivotement du gabarit (24) d'un angle Δα à partir de l'angle d'inclinaison α.

46. Dispositif selon l'une quelconque des revendications 42 à 45, **caractérisé en ce que** les mâchoires (26) coupantes sont agencées pour sectionner la colonne vertébrale ainsi que partiellement la masse musculaire du collier, uniquement dans la partie dorsale de la tranchée artère.

47. Dispositif selon l'une quelconque des revendications 42 à 45, **caractérisé en ce que** les mâchoires (26) coupantes sont agencées pour sectionner la colonne vertéhrale ainsi que la masse musculaire du collier et ce totalement.

48. Dispositif selon l'une quelconque des revendications 42 à 47, **caractérisé en ce que** le dispositif pour la détermination de la position de déjointage auquel il est spécialement destiné à être associé est conforme à l'une quelconque des revendications 34 à 40.

49. Installation de déjointage de la tête d'un animal abattu, à savoir un porc, dont le corps est disposé le long d'un axe principal, comprenant :
- des moyens support (1) du corps de l'animal et des moyens d'entraînement de ceux-ci ;
- un dispositif pour déjointer la tête, comportant des mâchoires coupantes (26) et un dispositif de détermination directe de la position de mise en oeuvre du dispositif pour déjointer la tête comportant un gabarit (24) échancré, selon respectivement l'une des revendications 42 à 48 et 34 à 41.

50. Installation selon la revendication 49, **caractérisée en ce que** les moyens support (1) du corps de l'animal sont agencés pour que ce dernier soit suspendu par les pattes de derrière, la tête dirigée vers le bas, l'axe principal étant vertical ou sensiblement vertical, le plan transversal à cet axe étant horizontal ou sensiblement horizontal.

51. Installation selon l'une quelconque des revendications 49 ou 50, **caractérisée en ce que** le gabarit (24) échancré et les mâchoires (26) coupantes sont deux pièces structurellement distinctes mais associées solidairement l'une à - et sur - l'autre, les mâchoires (26) du dispositif étant plus proches de la tête de l'animal que le gabarit (24).

52. Installation selon la revendication 51, caraetérisée en ce que les mâchoires (26) coupantes en position d'ouverture ménagent entre elles un espace libre plus grand que celui de l'échancrure (25), le bord de l'échancrure (25) du gabarit (24) sur lequel est opéré l'appui mastoïdien étant situé dans l'espace libre des mâchoires (26) coupantes dont le bord tranchant est alors protégé par le gabarit (24).

53. Installation selon l'une quelconque des revendications 49 ou 50, **caractérisée en ce que** le gabarit (24) échancré et les mâchoires (26) coupantes sont deux pièces structurellement distinctes mais associées structurellement solidairement l'une à - et sur - l'autre, le gabarit (24) étant plus proche de la tête de l'animal que les mâchoires (26) du dispositif.

54. Installation selon l'une quelconque des revendications 49 à 53, **caractérisée en ce que** les moyens support et les moyens de déplacement du gabarit (24) échancré et des mâchoires (26) coupantes sont communs, de même que l'axe de pivotement du gabarit (24) et de l'ensemble formé par les mâchoires (26) coupantes.

55. Installation selon l'une quelconque des revendications 49 à 54, **caractérisée en ce qu'**elle est à poste fixe, les moyens support (1) du corps de l'animal - et le corps lui-même - étant arrêtés pendant la mise en oeuvre des dispositifs de déjointage et pour déterminer la position de déjointage.

56. Installation selon l'une quelconque des revendications 49 à 54, **caractérisée en ce qu'**elle est à poste mobile, les moyens support (1) du corps de l'animal - et le corps lui-même - étant mobiles à défilement, notamment horizontal, pendant tout ou partie de la mise en oeuvre des dispositifs de déjointage et pour déterminer la position de déjointage.

57. Installation selon l'une quelconque des revendications 49 à 56, **caractérisée en ce qu'**elle comporte un bâti et, monté sur celui-ci - directement ou indirectement - un chariot (19) de support du gabarit (24) et des mâchoires (26) parallèlement à l'axe principal et transversalement, perpendiculairement à lui, notamment à son plan de défilement.

58. Installation selon l'une quelconque des revendications 49 à 57, **caractérisée en ce qu'**elle comporte également un organe d'appui, notamment fixe, tel qu'une barre (47) profilée, destiné à former un appui pour la partie ventrale du corps de l'animal afin de contribuer à son immobilisation.

59. Installation selon l'une quelconque des revendications 49 à 58, **caractérisée en ce que** les mâchoires (26) comprennent des bords incurvés tranchants (41) et des parties transversales distales (43) recourbées en pointe, vers l'intérieur, ces parties terminales étant susceptibles de pénétrer ponctuellement et partiellement dans la masse musculaire du collier afin de contribuer à immobiliser le corps.

60. Installation selon l'une quelconque des revendications 49 à 59, **caractérisée en ce qu'**elle incorpore également des moyens de nettoyage (44) du gabarit (24) et des mâchoires (26), ainsi qu'un carter dans lequel sont placés lors du nettoyage, le gabarit (24), les mâchoires (26) et les moyens de nettoyage (44).

## Claims

1. A method for determining, on the body (CO) of a slaughtered animal, namely a pig, disposed along a principal axis (D1), the optimum position for use of a disjointing device - referred to as the disjointing position - in which:
- a mechanical device is used for the direct determination of the disjointing position, comprising a scalloped template (24) defining a reference plane,
- the template (24) is positioned with its scallop around at least part of the body of the animal, outside, towards and from its dorsal part, in an approach position situated in the area of the disjointing position but away from it towards the rear of the animal,
- from the approach position, the template (24) is brought into inclined mastoid abutment, so that the reference plane is inclined with respect to a plane transverse to the principal axis, by a suitable acute angle α, in the direction going from the ventral part towards the dorsal part, and from the hind legs towards the front legs or the head.

2. A method according to Claim 1, **characterised in that** the angle α is chosen so as to be between approximately 10° and 45°, more especially between approximately 15° and 25°, notably equal to or around 20°.

3. A method according to either one of Claims 1 or 2, **characterised in that** the scallop in the template (24) is chosen so that it is placed without clamping or excessive clamping of the body, in order to be able to effect its relative movement with respect to the body of the animal from the approach position as far as the inclined mastoid abutment position, without substantial damage to the body of the animal.

4. A method according to any one of Claims 1 to 3, **characterised in that** the relative movement of the template (24) with respect to the body of the animal as far as the inclined mastoid abutment position is essentially a translation along the principal axis and in the direction of the head.

5. A method according to one of Claims 1 to 4, **characterised in that**, in order to arrive at the approach position, a relative movement of the template (24) is effected, with respect to the body, transversely to the principal axis, from a free position situated away from the body and on the same side as its dorsal part, and **in that** the said movement is essentially a translation perpendicular or substantially perpendicular to the principal axis.

6. A method according to one of Claims 1 to 5, **characterised in that** it includes a preliminary step of approximate determination of the disjointing position, so as to determine the approach position so that the movement of the template (24) from the approach position to the inclined mastoid abutment position is limited.

7. A method according to Claim 6, **characterised in that**, in order to effect the approximate determination of the disjointing position, first of all a significant position on the body of the animal is located: more especially the front free end of the head.

8. A method according to Claim 7, **characterised in that** the position of the front free end of the head of the animal is determined optically, by mechanical contact, by proximity detector, or equivalent.

9. A method according to Claim 7 or 8, **characterised in that**, having located the position of the front free end of the head of the animal, the length of the body of the animal is deduced therefrom and the location of the approach position is calculated accordingly.

10. A method according to one of Claims 1 to 9, **characterised in that** the starting point is a waiting position in which the template (24) is away from the disjointing position and the body of the animal, towards the rear, the template (24), with a suitable scallop (25) is brought, suitably inclined with the angle α, into the disengagement position, notably by means of an axial translation; next the relative transverse movement of the template (24) is effected with respect to the body of the animal from the disengagement position to the approach position; finally a relative axial translation of the template (24) is effected with respect to the body of the animal towards the head as far as the inclined mastoid abutment position.

11. A method according to one of Claims 1 to 10, **characterised in that** the inclined mastoid abutment position is determined following the locking exerted by the mastoid protuberances of the body of the animal on the template (24) with a suitable scallop (25).

12. A method according to one of Claims 1 to 11, **characterised in that**, once the template (24) is brought into the inclined mastoid abutment position, an additional limited relative movement of the template (24) is effected with respect to the body of the animal, in the direction of the head.

13. A method according to Claim 12, **characterised in that**, at the time of the additional relative movement, the template (24) is caused to pivot through a small angle Δα, in the direction of increase of the angle α, about an axis of pivoting of the template (24) situated away from the body of the animal towards the dorsal part and the head.

14. A method according to Claim 13, **characterised in that** the angle Δα is between approximately 5° and 10°.

15. A method according to any one of Claims 1 to 14, **characterised in that** the travel of the template (24) between the approach position and the inclined mastoid abutment position is around or less than a few centimetres.

16. A method according to any one of Claims 1 to 15, **characterised in that** the inclination of the reference plane of the template (24) remains constant or substantially constant throughout the performance of the method.

17. A method according to any one of Claims 1 to 16, **characterised in that** the angle α is adjusted according to the morphology of the body of the animal.

18. A method according to any one of Claims 1 to 17, **characterised in that** use is made of a device for determining the disjointing position which is integrated into and where applicable partially common to the disjointing device itself.

19. A method according to any one of Claims 1 to 18, **characterised in that**, during the relative movements of the template (24) with respect to the body of the animal with a view to the implementation of the method, the template (24) is mainly moved, without prejudice to a movement of the body of the animal, with a transverse movement.

20. A method according to any one of Claims 1 to 19, **characterised in that** the body of the animal is suspended with the head downwards, the principal axis being substantially vertical, the plane transverse to the principal axis being substantially horizontal, the template (24) being inclined so that the scallop (25) has its opening directed upwards.

21. A method for disjointing the head of a slaughtered animal, namely a pig, whose body is disposed along a principal axis, in which:
- a mechanical head disjointing device is used, comprising cutting jaws (26) defining a principal plane;
- the optimum position for positioning the disjointing device is determined directly on the body of the animal, by means of a device for determining the disjointing position, this disjointing position being such that the principal plane is inclined with respect to a plane transverse to the principal axis by a suitable acute angle equal to or close to α, in the direction going from the ventral part towards the dorsal part and from the hind legs towards the front legs or the head;
- the disjointing device is positioned in the disjointing position and is actuated in this position;
- a mechanical device is used for determining the disjointing position, comprising a scalloped template (24), integrated into and where applicable partly common to the disjointing device itself.

22. A method for disjointing the head of a slaughtered animal, namely a pig, whose body is disposed along a principal axis, in which:
- a mechanical head disjointing device is used, comprising cutting jaws (26) defining a principal plane;
- the optimum positioning for positioning the disjointing device is determined directly on the body of the animal by the method according to one of Claims 1 to 20 by means of the device for determining the disjointing position, the principal plane being inclined with respect to a plane transverse to the principal axis by a suitable acute angle equal to or close to α, in the direction going from the ventral part towards the dorsal part and from the hind legs towards the front legs or the head;
- the disjointing device is positioned in the disjointing position and is actuated in this position.

23. A method according to either one of Claims 21 or 22, **characterised in that** the disjointing device is actuated by clamping the cutting jaws (26) on the body of the animal once, notably immediately after, the template (24) has made it possible to determine the disjointing position.

24. A method according to one of Claims 21 to 23, **characterised in that** the disjointing device, namely the cutting jaws (26), is controlled from the locking exerted on the template (24) by the mastoid protuberances, respectively by the additional pivoting Δα of the template (24), or respectively by the cutting jaws (26).

25. A method according to any one of Claims 21 to 24, **characterised in that** the head is disjointed by cutting the vertebral column and the muscular mass of the neck, partially, solely in the dorsal part of the rear trachea, the head remaining associated with the remaining part of the body of the animal through the ventral part.

26. A method according to any one of Claims 21 to 24, **characterised in that** the head is disjointed by cutting the vertebral column and the muscular mass, and this totally, the head then being totally separated from the remaining part of the body of the animal.

27. A method according to any one of Claims 21 to 26, **characterised in that**, before the vertebral column and the muscular mass of the neck are cut, the body of the animal is substantially immobilised, at least relatively with respect to the cutting jaws (26).

28. A method according to Claim 27, **characterised in that** the immobilisation of the body of the animal is helped by means of the template (24) and/or the cutting jaws (26), the latter having distal end parts (43) which are curved in a point inwards, partially penetrating the muscular mass of the neck at isolated points.

29. A method according to Claim 27, **characterised in that** the immobilisation of the body of the animal is helped by providing on it an abutment in the ventral part.

30. A method according to any one of Claims 21 to 29, **characterised in that** the reference plane and the principal plane are, if not merged, at least placed parallel to and in the immediate vicinity of each other.

31. A method according to any one of Claims 21 to 30, **characterised in that** the scalloped template (24) and the cutting jaws (26) are two parts which are structurally separate from each other but fixedly associated with each other, parallel to and in the immediate vicinity of each other, the assembly consisting of the two parts forming a clamp (21).

32. A method according to any one of Claims 21 to 30, **characterised in that** the scalloped template (24) and the cutting jaws (26) are one and the same part forming a clamp (21), this part first of all providing the function of determining the disjointing position and next the disjointing function proper.

33. A method according to Claim 30, **characterised in that** the principal plane is slightly offset with respect to the reference plane on the same side as the head of the animal.

34. A device for the direct determination of the position of use of a head disjointing device referred to as the disjointing position, especially intended for forming part of an installation for disjointing the head of a slaughtered animal whose body is disposed along a principal axis, namely a pig, comprising
- a template (24) provided with an appropriate suitable scallop (25) defining a reference plane suitable on the one hand for being placed around the body of the animal, outside, near to and from its dorsal part, in an approach position situated in the area of the disjointing position but away from this towards the rear of the animal, and in addition for being brought into inclined mastoid abutment, in which the template (24) is then positioned so that the reference plane is inclined with respect to a plane transverse to the principal axis by a suitable acute angle α, in the direction going from the ventral part towards the dorsal part, and from the hind legs towards the front legs or the head;
- means supporting the template (24) and means for relative movement of the template (24) with respect to means (1) supporting the body of the animal between a distant waiting position and the inclined mastoid abutment position, notably via a disengagement position and the approach position;
- and means of detecting the fact that the template is situated in the inclined mastoid abutment position.

35. A device according to Claim 34, **characterised in that** it is especially suitable for and intended for the implementation of the method according to any one of Claims 1 to 20.

36. A device according to either one of Claims 34 or 35, **characterised in that** the means of supporting the template (24) and its means of relative movement are suitable for and arranged so as to keep the template (24) inclined at the angle α, or respectively α + Δα, and to move the template (24), notably inclined, in translation along the principal axis and along a transverse axis, notably perpendicular to it.

37. A device according to any one of Claims 34 to 36, **characterised in that** it is functionally associated with means for the approximate determination of the disjointing position.

38. A device according to Claim 37, **characterised in that** the means for the approximate determination of the disjointing position are means of locating a significant location on the body of the animal, such as the front free end of the head, these means being of the type functioning optically, by mechanical contact, by proximity detector or equivalent.

39. A device according to Claim 38, **characterised in that** means, notably programmed, of calculating the approach position are associated with the locating means.

40. A device according to any one of Claims 34 to 39, **characterised in that** the means of supporting the template (24) allow its pivoting by an angle Δα with respect to the inclined position of angle α, the axis of pivoting being situated away from the animal body towards the dorsal part and the head.

41. A device according to any one of Claims 34 to 40, **characterised in that** the means of detecting the fact that the template (24) is situated in the inclined mastoid abutment position comprise means such as a sensor or contact for detecting the pivoting of the template (24) through a small angle Δα as from the angle of inclination α, the pivoting through the angle Δα resulting from the mastoid abutment exerted on the template (24) with a small translation of the means supporting the template (24) along the principal axis.

42. A device for disjointing the head of a slaughtered animal, namely a pig, whose body is disposed along a principal axis, especially intended to form part of a disjointing installation, comprising:
- cutting jaws (26) defining a principal plane, able on the one hand to be placed around the body of the animal, outside, close to and from its dorsal part, in a position in which the principal plane is inclined with respect to a plane transverse to the principal axis by a suitable acute accent α or α - Δα, in the direction going from the ventral part towards the dorsal part and from the hind legs towards the front legs or the head, and in addition to be clamped, by virtue of activation means (40), so as to be able to select the vertebral column and, at least partially, the muscular mass of the neck;
- support means, movement means and means of actuating the jaws (26);
- a mechanical device for the direct determination of the position of use of the disjointing device comprising a scalloped template (24), integrated into and where applicable partly common to the disjointing device itself.

43. A device according to Claim 42, **characterised in that** it is especially suitable for and intended for the implementation of the method according to any one of Claims 21 to 33.

44. A device according to either one of Claims 42 or 43, **characterised in that** the control for clamping the cutting jaws with a view to the required cutting is responsive to the locking of a scalloped template (24) of the device for determining the disjointing position on the mastoid abutments.

45. A device according to Claim 44, **characterised in that** the control for clamping the cutting jaws (26) is responsive to the means of detecting the pivoting of the template (24) through an angle Δα from the angle of inclination α.

46. A device according to any one of Claims 42 to 45, **characterised in that** the cutting jaws (26) are arranged for cutting the vertebral column and partially the muscular mass of the collar, solely in the dorsal part of the arterial trench.

47. A device according to any one of Claims 42 to 45, **characterised in that** the cutting jaws (26) are arranged to cut the vertebral column and the muscular mass of the neck, and this completely.

48. A device according to any one of Claims 42 to 47, **characterised in that** the device for determining the disjointing position with which it is especially intended to be associated is in accordance with any one of Claims 34 to 40.

49. An installation for disjointing the head of a slaughtered animal, namely a pig, whose body is disposed along a principal axis, comprising:
- means (1) supporting the body of the animal and means of driving these;
- a device for disjointing the head, including cutting jaws (26) and a device for the direct determination of the position of use of the device for disjointing the head including a scalloped template (24), according respectively to one of Claims 42 to 48 and 34 to 41.

50. An installation according to Claim 49, **characterised in that** the means (1) of supporting the body of the animal are arranged so that the latter is suspended by the hind legs, the head directed downwards, the principal axis being vertical or substantially vertical, the plane transverse to this axis being horizontal or substantially horizontal.

51. An installation according to either one of Claims 49 or 50, **characterised in that** the scalloped template (24) and the cutting jaws (26) are two parts which are structurally distinct but associated fixedly with and on each other, the jaws (26) of the device being closer to the head of the animal than the template (24).

52. An installation according to Claim 51, **characterised in that** the cutting jaws (26) in the open position form between them a free space larger than that of the scallop (25), the edge of the scallop (25) in the template (24) on which the mastoid abutment is effected being situated in the free space of the cutting jaws (26), the cutting edge of which is then protected by the template (24).

53. An installation according to either one of Claims 49 or 50, **characterised in that** the scalloped template (24) and the cutting jaws (26) are two parts which are structurally separate but structurally associated fixedly with and on each other, the template (24) being closer to the head of the animal than the jaws (26) of the device.

54. An installation according to any one of Claims 49 to 53, **characterised in that** the support means and the means of moving the scalloped template (24) and the cutting jaws (26) are common, just like the axis of pivoting of the template (24) and of the assembly formed by the cutting jaws (26).

55. An installation according to any one of Claims 49 to 54, **characterised in that** it is of the fixed station type, the means (1) of supporting the body of the animal - and the body itself - being stopped during the use of the disjointing devices and in order to determine the disjointing position.

56. An installation according to any one of Claims 49 to 54, **characterised in that** it is of the moving station type, the means (1) of supporting the body of the animal - and the body itself - being able to move, notably horizontally, throughout all or part of the use of the disjointing device and the device for determining the disjointing position.

57. An installation according to any one of Claims 49 to 56, **characterised in that** it has a frame and, mounted thereon - directly or indirectly - a carriage (19) for supporting the template (24) and the jaws (26) parallel to the principal axis and transversely, perpendicularly to it, notably to its movement plane.

58. An installation according to any one of Claims 49 to 57, **characterised in that** it also has an abutment member, notably fixed, such as a profiled bar (47), intended to form an abutment for the ventral part of the body of the animal in order to help to immobilise it.

59. An installation according to any one of Claims 49 to 58, **characterised in that** the jaws (26) comprise curved cutting edges (41) and transverse distal parts (43) curved at a tip, inwards, these end parts being able to penetrate at isolated points and partially into the muscular mass of the neck in order to help to immobilise the body.

60. An installation according to any one of Claims 49 to 59, **characterised in that** it also incorporates means (44) of cleaning of the template (24) and the jaws (26), and a housing in which, during cleaning, the template (24), the jaws (26) and the cleaning means (44) are placed.

## Patentansprüche

1. Verfahren zur Bestimmung der optimalen Position - der sogenannten Zerlegungsposition - auf dem Körper (CO)eines geschlachteten Tieres, und zwar eines entlang einer Hauptachse (D1) angeordneten Schweins zur Umsetzung einer Zerlegungseinrichtung, in der
- man eine mechanische Einrichtung zur direkten Bestimmung der Zerlegungsposition umsetzt, umfassend eine ausgeschnittene Vorrichtung (24), die eine Referenzebene definiert;
- man die Vorrichtung (24) mit ihrem Ausschnitt um wenigstens einen Teil des Tierkörpers außen plaziert, gegen den und ausgehend von seinem Rückenteil, in einer Annäherungsposition, die sich in der Zone der Zerlegungsposition befindet, jedoch von dieser entfernt zum Hinterteil des Tiers hin;
- man von der Annäherungsposition aus die Vorrichtung (24) derart zum Aufliegen des geneigten Fortsatzes bringt, daß die Referenzebene im Verhältnis zu einer zur Hauptachse querverlaufenden Ebene um einen geeigneten spitzen Winkel α in der Richtung geneigt wird, die vom Bauchteil zum Rückenteil und von den Hinterbeinen zu den Vorderbeinen oder dem Kopf verläuft.

2. Verfahren gemäß Anspruch 1, **dadurch gekennzeichnet, daß** man den Winkel α zwischen ungefähr 10 und 45° wählt, ganz besonders zwischen ungefähr 15 und 25°, insbesondere gleich oder in der Größenordnung von 20°.

3. Verfahren gemäß Anspruch 1 oder 2, **dadurch gekennzeichnet, daß** man den Ausschnitt der Vorrichtung (24) derart wählt, daß dieser ohne Festklemmen oder ohne übermäßiges Festklemmen des Körpers plaziert wird, um seine relative Verschiebung der Annäherungsposition im Verhältnis zum Tierkörper von der Annäherungsposition bis zur Aufliegeposition des geneigten Fortsatzes ohne wesentliche Beschädigung des Tierkörpers arbeiten kann.

4. Verfahren gemäß Anspruch 1 bis 3, **dadurch gekennzeichnet, daß** die relative Verschiebung der Vorrichtung (24) im Verhältnis zum Tierkörper bis zur Aufliegeposition des geneigten Fortsatzes im wesentlichen eine Translation entlang der Hauptachse und in Richtung des Kopfes ist.

5. Verfahren gemäß Anspruch 1 bis 4, **dadurch gekennzeichnet, daß** man zur Erreichung der Annäherungsposition eine relative Verschiebung der Vorrichtung (24) im Verhältnis zum Körper querverlaufend zur Hauptachse von einer Freisetzungsposition aus durchführt, die sich vom Körper entfernt und neben seinem Rückenteil befindet; und daß besagte Verschiebung im wesentlichen eine zur Hauptachse senkrechte oder deutlich senkrechte Translation ist.

6. Verfahren gemäß Anspruch 1 bis 5, **dadurch gekennzeichnet, daß** es eine Vorstufe zur ungefähren Bestimmung der Zerlegungsposition derart umfaßt, daß die Annäherungsposition bestimmt wird, damit die Verschiebung der Vorrichtung (24) von der Annäherungsposition zur Aufliegeposition des geneigten Fortsatzes beschränkt wird.

7. Verfahren gemäß Anspruch 6, **dadurch gekennzeichnet, daß** man zur Realisierung der ungefähren Bestimmung der Zerlegungsposition zunächst eine bedeutende Stelle auf dem Tierkörper oder des Tierkörpers lokalisiert; ganz besonders das freie äußere Vorderende des Kopfes.

8. Verfahren gemäß Anspruch 7, **dadurch gekennzeichnet, daß** man das freie äußere Vorderende des Kopfes des Tieres auf optische Weise, durch mechanischen Kontakt, durch Näherungsschalter oder Gleichwertiges lokalisiert.

9. Verfahren gemäß Anspruch 7 oder 8, **dadurch gekennzeichnet, daß** man nach der Lokalisierung des freien äußeren Vorderendes des Kopfes des Tieres die Länge des Tierkörpers erschließt und man infolgedessen den Ort der Annäherungsposition berechnet.

10. Verfahren gemäß Anspruch 1 bis 9, **dadurch gekennzeichnet, daß** man von einer Warteposition ausgeht, in der die Vorrichtung (24) von der Zerlegungsposition und dem Tierkörper nach hinten entfernt wird; man führt die im passenden Winkel α geneigte Vorrichtung (24) mit geeignetem Ausschnitt (25) in die Freisetzungsposition, insbesondere durch eine axiale Translation; anschließend führt man die relative querverlaufende Verschiebung der Vorrichtung (24) im Verhältnis zum Tierkörper von der Freisetzungsposition zur Annäherungsposition durch; schließlich führt man eine relative axiale Translation der Vorrichtung (24) im Verhältnis zum Tierkörper zum Kopf bis zur Aufliegeposition des geneigten Fortsatzes durch.

11. Verfahren gemäß Anspruch 1 bis 10, **dadurch gekennzeichnet, daß** man die Aufliegeposition des geneigten Fortsatzes im Anschluß an die Blockierung bestimmt, die durch Fortsatz-Protuberanzen des Tierkörpers auf die Vorrichtung (24) des geeigneten Ausschnitts (25) ausgeübt wird.

12. Verfahren gemäß Anspruch 1 bis 11, **dadurch gekennzeichnet, daß** man, sobald die Vorrichtung (24) in die Aufliegeposition des geneigten Fortsatzes gebracht wurde, eine zusätzliche relative beschränkte Bewegung der Vorrichtung (24) im Verhältnis zum Tierkörper in Richtung des Kopfes durchführt.

13. Verfahren gemäß Anspruch 12, **dadurch gekennzeichnet, daß** man bei der relativen zusätzlichen Bewegung die Vorrichtung (24) um einen kleinen Winkel Δα in Richtung der Vergrößerung des Winkels α um eine Schwenkachse der Vorrichtung (24) schwenken läßt, die sich entfernt vom Tierkörper zum Rückenteil und zum Kopf befindet.

14. Verfahren gemäß Anspruch 13, **dadurch gekennzeichnet, daß** der Winkel Δα ungefähr zwischen 5 und 10° inbegriffen ist.

15. Verfahren gemäß Anspruch 1 bis 14, **dadurch gekennzeichnet, daß** der Lauf der Vorrichtung (24) zwischen der Annäherungsposition und der Aufliegeposition des geneigten Fortsatzes in der Größenordnung von einigen Zentimetern oder kleiner als einige Zentimeter ist.

16. Verfahren gemäß Anspruch 1 bis 15, **dadurch gekennzeichnet, daß** die Neigung der Referenzebene der Vorrichtung (24) während des ganzen Ablaufs des Verfahrens konstant oder deutlich konstant bleibt.

17. Verfahren gemäß Anspruch 1 bis 16, **dadurch gekennzeichnet, daß** man den Winkel α in Abhängigkeit von der Morphologie des Tierkörpers einstellt.

18. Verfahren gemäß Anspruch 1 bis 17, **dadurch gekennzeichnet, daß** man eine Einrichtung zur Bestimmung der Position der integrierten Zerlegung und gegebenenfalls zum Teil gemeinsam mit der Zerlegungseinrichtung selbst umsetzt.

19. Verfahren gemäß Anspruch 1 bis 18, **dadurch gekennzeichnet, daß** man bei den relativen Verschiebungen der Vorrichtung (24) im Verhältnis zum Tierkörper im Hinblick auf die Umsetzung des Verfahrens im wesentlichen die Vorrichtung (24) verschiebt, unbeschadet einer Verschiebung des Tierkörpers beim querverlaufenden Durchlauf.

20. Verfahren gemäß Anspruch 1 bis 19, **dadurch gekennzeichnet, daß** man den Tierkörper mit dem Kopf nach unten hängt, wobei die Hauptachse deutlich vertikal ist, die zur Hauptachse verlaufende querverlaufende Ebene deutlich horizontal ist, die Vorrichtung (24) derart geneigt ist, daß die Öffnung des Ausschnitts (25) nach oben gerichtet ist.

21. Verfahren zum Abtrennen des Kopfes eines geschlachteten Tieres, und zwar eines Schweins, dessen Körper entlang einer Hauptachse angeordnet ist, in dem:
- man eine mechanische Einrichtung zum Abtrennen des Kopfes umsetzt, umfassend Schneidklemmen (26), die eine Hauptebene definieren;
- man direkt auf dem Tierkörper die optimale Position zur Positionierung der Zerlegungseinrichtung mittels einer Einrichtung zur Bestimmung der Zerlegungsposition bestimmt, wobei diese Zerlegungsposition derart ist, daß die Hauptebene im Verhältnis zu einer zur Hauptachse querverlaufenden Ebene in der Richtung vom Bauchteil zum Rückenteil und von den Hinterbeinen zu den Vorderbeinen oder dem Kopf um einen geeigneten spitzen Winkel geneigt ist, der gleich oder annähernd α ist;
- man die Zerlegungseinrichtung in der Zerlegungsposition positioniert und man sie in dieser Position betätigt;
- man eine mechanische Einrichtung zur Bestimmung der Zerlegungsposition umsetzt, umfassend eine ausgeschnittene Vorrichtung (24), die integriert und gegebenenfalls teilweise der Zerlegungseinrichtung selbst gemeinsam ist;

22. Verfahren zum Abrennen des Kopfes eines geschlachteten Tieres, und zwar eines Schweins, dessen Körper entlang einer Hauptachse angeordnet ist, in dem:
- man eine mechanische Einrichtung zum Abtrennen des Kopfes umsetzt, umfassend Schneidklemmen (26), die eine Hauptebene definieren;
- man direkt auf dem Tierkörper die optimale Position zur Positionierung der Zerlegungseinrichtung durch das Verfahren gemäß Anspruch 1 bis 20 mittels der Einrichtung zur Bestimmung der Zerlegungsposition bestimmt, wobei die Hauptebene vom Bauchteil zum Rückenteil und von den Hinterbeinen zu den Vorderbeinen oder dem Kopf im Verhältnis zu einer zur Hauptachse querverlaufenden Ebene um einen geeigneten spitzen Winkel gleich oder annähernd α geneigt ist,;
- man die Zerlegungseinrichtung direkt in der Zerlegungsposition positioniert und man sie in dieser Position betätigt.

23. Verfahren gemäß Anspruch 21 oder 22, **dadurch gekennzeichnet, daß** man die Zerlegungseinrichtung durch einmaliges Festklemmen der Schneidklemmen (26) auf dem Tierkörper betätigt, insbesondere unmittelbar nachdem die Vorrichtung (24) die Bestimmung der Zerlegungsposition erlaubt hat.

24. Verfahren gemäß Anspruch 21 bis 23, **dadurch gekennzeichnet, daß** man die Zerlegungseinrichtung - nämlich die Schneidklemmen (26) - von der durch die Fortsatz-Protuberanzen, beziehungsweise durch das zusätzliche Schwenken Δα der Vorrichtung (24), beziehungsweise der Schneidklemmen (26) auf die Vorrichtung (24) ausgeübte Blockierung aus steuert.

25. Verfahren gemäß Anspruch 21 bis 24, **dadurch gekennzeichnet, daß** man den Kopf durch Durchtrennen der Wirbelsäule sowie teilweise der Muskelmasse des Halses ausschließlich im Rückenteil der Luftröhre abtrennt, wobei der Kopf durch den Bauchteil am restlichen Teil des Tierkörpers verbleibt.

26. Verfahren gemäß Anspruch 21 bis 24, **dadurch gekennzeichnet, daß** man den Kopf durch Abtrennen der Wirbelsäule sowie der Muskelmasse, und zwar vollständig, abtrennt, wobei der Kopf vollständig vom restlichen Teil des Tierkörpers entfernt wird.

27. Verfahren gemäß Anspruch 21 bis 26, **dadurch gekennzeichnet, daß** man vor dem Durchtrennen der Wirbelsäule und der Muskelmasse des Halses im wesentlichen den Tierkörper wenigstens im Verhältnis zu den Schneidklemmen (26) immobilisiert.

28. Verfahren gemäß Anspruch 27, **dadurch gekennzeichnet, daß** man zur Immobilisierung des Tierkörpers mittels der Vorrichtung (24) und / oder der Schneidklemmen (26) beiträgt, wobei letztere entfernte Endteile (43) haben, die nach innen spitz zulaufen und dabei punktmäßig und teilweise in die Muskelmasse des Halses eindringen.

29. Verfahren gemäß Anspruch 27, **dadurch gekennzeichnet, daß** man zur Immobilisierung des Tierkörpers dadurch beiträgt, daß man auf ihn im Bauchbereich einen Druck gewährleistet.

30. Verfahren gemäß Anspruch 21 bis 29, **dadurch gekennzeichnet, daß** die Referenzebene und die Hauptebene, wenn sie nicht zusammenfallen, wenigstens parallel und in unmittelbarer Nähe voneinander plaziert sind.

31. Verfahren gemäß Anspruch 21 bis 30, **dadurch gekennzeichnet, daß** die ausgeschnittene Vorrichtung (24) und die Schneidklemmen (26) strukturell zwei voneinander verschiedene Stücke, jedoch fest miteinander und aufeinander parallel und in der unmittelbaren Nähe voneinander verbunden angeordnet sind, wobei der Aufbau der zwei Stücke eine Klammer (21) bildet.

32. Verfahren gemäß Anspruch 21 bis 30, **dadurch gekennzeichnet, daß** die ausgeschnittene Vorrichtung (24) und die Schneidklemmen (26) ein und dasselbe Stück sind, das eine Klammer (21) bildet, wobei dieses Stück zunächst die Funktion der Bestimmung der Zerlegungsposition und anschließend die Funktion der eigentlichen Zerlegung erfüllt.

33. Verfahren gemäß Anspruch 30, **dadurch gekennzeichnet, daß** die Hauptebene im Verhältnis zur Referenzebene auf der Kopfseite des Tieres leicht versetzt ist.

34. Einrichtung zur direkten Bestimmung der Position zur Umsetzung einer Abtrenneinrichtung des Kopfes, der sogenannten Abtrennposition, insbesondere dazu bestimmt, zu einer Abtrennanlage des Kopfes eines geschlachteten Tieres, und zwar eines Schweins, zu gehören, dessen Körper entlang einer Hauptachse angeordnet ist, umfassend:
- eine Vorrichtung (24), die mit einem geeigneten passenden Ausschnitt (25) versehen ist, der eine Referenzebene definiert, die geeignet ist, einerseits außen um den Tierkörper von und zu seinem Rückenteil in einer Annäherungsposition plaziert zu werden, die sich in der Zone der Abtrennposition, jedoch entfernt von dieser zum Hinterteil des Tieres befindet; und andererseits zum Aufliegen des geneigten Fortsatzes gebracht wird, in dem die Vorrichtung (24) dann derart positioniert wird, daß die Referenzebene im Verhältnis einer zur Hauptachse eines geeigneten spitzen Winkels α querverlaufenden Ebene in der Richtung vom Bauchteil zum Rückenteil und den Hinterbeinen zu den Vorderbeinen oder dem Kopf geneigt wird;
- Stützmittel der Vorrichtung (24) und Mittel zur relativen Verschiebung der Vorrichtung (24) im Verhältnis zu den Stützmitteln (1) des Tierkörpers zwischen einer entfernten Warteposition und der Aufliegeposition des geneigten Fortsatzes insbesondere über eine Freisetzungsposition und die Annäherungsposition;
- und Mittel zur Feststellung, daß die Vorrichtung sich in der Stützposition des geneigten Fortsatzes befindet.

35. Einrichtung gemäß Anspruch 34, **dadurch gekennzeichnete, daß** sie besonders geeignet und dazu bestimmt ist, die Umsetzung des Verfahrens gemäß Anspruch 1 bis 20 zu realisieren.

36. Einrichtung gemäß Anspruch 34 oder 35, **dadurch gekennzeichnet, daß** die Stützmittel der Vorrichtung (24) und ihre Mittel zur relativen Verschiebung geeignet und angeordnet sind, die Vorrichtung (24) im Winkel α, beziehungsweise α + Δα geneigt zu halten und die insbesondere geneigte Vorrichtung (24) in Translation entlang der Hauptachse sowie entlang einer querverlaufenden, insbesondere senkrecht zu dieser verlaufenden Achse zu verschieben.

37. Einrichtung gemäß Anspruch 34 bis 36, **dadurch gekennzeichnet, daß** sie funktional den Mitteln zur ungefähren Bestimmung der Zerlegungsposition zugeordnet ist.

38. Einrichtung gemäß Anspruch 37, **dadurch gekennzeichnet, daß** die Mittel zur ungefähren Bestimmung der Zerlegungsposition Mittel zur Lokalisierung einer bedeutenden Stelle auf dem Tierkörper oder des Tierkörpers sind, wie zum Beispiel das freie äußere Vorderende des Kopfes, wobei diese Mittel optisch, durch mechanischen Kontakt, durch Näherungsschalter oder Gleichwertiges funktionieren.

39. Einrichtung gemäß Anspruch 38, **dadurch gekennzeichnet, daß** den Lokalisierungsmitteln Berechnungsmittel, insbesondere programmierte, der Annäherungsposition zugeordnet sind.

40. Einrichtung gemäß Anspruch 34 bis 39, **dadurch gekennzeichnet, daß** die Stützmittel der Vorrichtung (24) ihr Schwenken um einen Winkel Δα im Verhältnis zur geneigten Position des Winkels α erlauben, wobei die Schwenkachse sich entfernt vom Tierkörper zum Rückenteil und zum Kopf befindet.

41. Einrichtung gemäß Anspruch 34 bis 40, **dadurch gekennzeichnet, daß** die Mittel zur Feststellung, daß die Vorrichtung (24) sich in der Aufliegeposition des geneigten Fortsatzes befindet, umfassend Mittel wie zum Beispiel einen Sensor oder einen Impulsgeber zur Feststellung des Schwenkens der Vorrichtung (24) eines kleinen Winkels Δα vom Neigungswinkel α aus, wobei das Schwenken des Winkels Δα aus dem Aufliegen des Fortsatzes resultiert, das auf die Vorrichtung (24) mit einer kleinen Translation der Stützmittel der Vorrichtung (24) entlang der Hauptachse ausgeübt wird.

42. Einrichtung zum Abtrennen des Kopfes eines geschlachteten Tieres, und zwar eines Schweins, dessen Körper entlang einer Hauptachse angeordnet ist, insbesondere dazu bestimmt, zu einer Zerlegungsanlage zu gehören, umfassend:
- Schneidklemmen (26), die eine Hauptebene definieren, einerseits dazu geeignet, um den Tierkörper außen zu und von seinem Rückenteil in einer Position plaziert zu werden, in der die Hauptebene im Verhältnis zu einer zur Hauptachse querverlaufenden Ebene um einen passenden spitzen Winkel α oder + Δα in Richtung vom Bauchteil zum Rückenteil und den Hinterbeinen zu den Vorderbeinen oder dem Kopf geneigt ist; und andererseits mittels Betätigungsmitteln (40) derart festgeklemmt zu werden, daß die Wirbelsäule sowie wenigstens teilweise die Muskelmasse des Halses durchtrennt werden kann;
- Stützmittel, Verschiebungsmittel und Mittel zur Betätigung der Klemmen (26);
- eine mechanische Einrichtung zur direkten Bestimmung der Position zur Umsetzung der Abtrenneinrichtung, umfassend eine ausgeschnittene, integrierte und gegebenenfalls teilweise mit der Abtrenneinrichtung selbst gemeinsame Vorrichtung (24).

43. Einrichtung gemäß Anspruch 42, **dadurch gekennzeichnet, daß** sie besonders geeignet und dazu bestimmt ist, das Verfahren gemäß Anspruch 21 bis 33 umzusetzen.

44. Einrichtung gemäß Anspruch 42 oder 43, **dadurch gekennzeichnet, daß** die Festklemmsteuerung der Schneidklemmen zum gewünschten Durchtrennen auf die Blockierung einer ausgeschnittenen Vorrichtung (24) der Einrichtung zur Bestimmung der Zerlegungsposition auf den Fortsatzauflagen anspricht.

45. Einrichtung gemäß Anspruch 44, **dadurch gekennzeichnet, daß** die Festklemmsteuerung der Schneidklemmen (26) auf die Mittel zur Feststellung des Schwenkens der Vorrichtung (24) um einen Winkel Δα vom Neigungswinkel α aus anspricht.

46. Einrichtung gemäß Anspruch 42 bis 45, **dadurch gekennzeichnet, daß** die Schneidklemmen (26) angeordnet sind, um die Wirbelsäule sowie teilweise die Muskelmasse des Halses ausschließlich im Rückenteil der Luftröhre zu durchtrennen.

47. Einrichtung gemäß Anspruch 42 bis 45, **dadurch gekennzeichnet, daß** die Schneidklemmen (26) angeordnet sind, um die Wirbelsäule sowie die Muskelmasse des Halses, und zwar vollständig, zu durchtrennen.

48. Einrichtung gemäß Anspruch 42 bis 47, **dadurch gekennzeichnet, daß** die Vorrichtung zur Bestimmung der Zerlegungsposition, zu deren Zuordnung sie insbesondere bestimmt ist, Anspruch 34 bis 40 entspricht.

49. Abtrennanlage des Kopfes eines geschlachteten Tieres, und zwar eines Schweins, dessen Körper entlang einer Hauptachse angeordnet ist, umfassend:
- Stützmittel (1) des Tierkörpers und Antriebsmittel derselben;
- eine Einrichtung zur Abtrennen des Kopfes, umfassend Schneidklemmen (26) und eine Einrichtung zur direkten Bestimmung der Position zur Umsetzung der Einrichtung zum Abtrennen des Kopfes, umfassend eine ausgeschnittene Vorrichtung (24), gemäß jeweils einem der Ansprüche 42 bis 48 und 34 bis 41.

50. Anlage gemäß Anspruch 49, **dadurch gekennzeichnet, daß** die Stützmittel (1) des Tierkörpers angeordnet sind, damit dieser an den Hinterbeinen und mit nach unten gerichtetem Kopf aufgehängt wird, wobei die Hauptachse vertikal oder deutlich vertikal ist, die zu dieser Achse querverlaufende Ebene horizontal oder deutlich horizontal ist.

51. Anlage gemäß Anspruch 49 oder 50, **dadurch gekennzeichnet, daß** die ausgeschnittene Vorrichtung (24) und die Schneidklemmen (26) zwei strukturell voneinander unterschiedliche, jedoch fest miteinander und aufeinander verbundene, zugeordnete Stücke sind, wobei die Klemmen (26) der Einrichtung näher am Kopf des Tieres als die Vorrichtung (24) sind.

52. Anlage gemäß Anspruch 51, **dadurch gekennzeichnet, daß** die Schneidklemmen (26) in Öffnungsposition untereinander einen größeren Freiraum aussparen als der des Ausschnitts (25), wobei der Rand der Aussparung (25) der Vorrichtung (24), auf der das Aufliegen des Fortsatzes ausgeübt wird, sich im Freiraum der Schneidklemmen (26) befindet, deren schneidender Rand dann von der Vorrichtung (24) geschützt wird.

53. Anlage gemäß Anspruch 49 oder 50, **dadurch gekennzeichnet, daß** die ausgeschnittene Vorrichtung (24) und die Schneidklemmen (26) zwei strukturell voneinander unterschiedliche, jedoch strukturell fest miteinander und aufeinander verbundene, zugeordnete Stücke sind, wobei die Vorrichtung (24) näher am Kopf des Tieres ist als die Klemmen (26) der Vorrichtung.

54. Anlage gemäß Anspruch 49 bis 53, **dadurch gekennzeichnet, daß** die Stützmittel und die Verschiebungsmittel der ausgeschnittenen Vorrichtung (24) und die Schneidklemmen (26) gemeinsam sind, ebenso wie die Schwenkachse der Vorrichtung (24) und des durch die Schneidmittel (26) gebildeten Aufbaus.

55. Anlage gemäß Anspruch 49 bis 54, **dadurch gekennzeichnet, daß** sie einen festen Posten hat, wobei die Stützmittel (1) des Tierkörpers - und der Körper selbst - während der Umsetzung der Zerlegungseinrichtungen und zur Bestimmung der Zerlegungsposition festgestellt werden.

56. Anlage gemäß Anspruch 49 bis 54, **dadurch gekennzeichnet, daß** sie einen mobilen Posten hat, wobei die Stützmittel (1) des Tierkörpers - und der Körper selbst - beim Durchlauf, insbesondere beim horizontalen, während der gesamten oder teilweisen Umsetzung der Zerlegungseinrichtungen und zur Bestimmung der Zerlegungsposition mobil sind

57. Anlage gemäß Anspruch 49 bis 56, **dadurch gekennzeichnet, daß** sie ein Tragelement und einen - direkt oder indirekt - auf diesem aufgebauten Unterstellwagen (19) der Vorrichtung (24) und Klemmen (26) parallel zur Hauptachse und querverlaufend, zu dieser senkrecht, insbesondere zu ihrer Durchlaufebene umfaßt.

58. Anlage gemäß Anspruch 49 bis 57, **dadurch gekennzeichnet, daß** sie ebenfalls ein Stützorgan, besonders ein festes, wie zum Beispiel eine Profilstange (47) umfaßt, die dazu bestimmt ist, eine Stütze für den Bauchteil des Tierkörpers zu bilden, um zu seiner Immobilisierung beizutragen.

59. Anlage gemäß Anspruch 49 bis 58, **dadurch gekennzeichnet, daß** die Klemmen (26) eingebogene Schneidränder (41) und querverlaufende entfernte, nach innen spitz zulaufende Teile (43) umfassen, wobei diese Teile geeignet sind, punktmäßig und teilweise in die Muskelmasse des Halses einzudringen, um zur Immobilisierung des Körpers beizutragen.

60. Anlage gemäß Anspruch 49 bis 59, **dadurch gekennzeichnet, daß** sie ebenfalls Mittel zur Reinigung (44) der Vorrichtung (24) und der Klemmen (26) sowie einen Kasten umfaßt, in dem die Vorrichtung (24), die Klemmen (26) und die Reinigungsmittel (44) bei der Reinigung untergebracht sind.
